(19) Europäisches Patentamt
European Patent Office
Office européen des brevets

(11) EP 4 491 691 A1

(12) **EUROPEAN PATENT APPLICATION**
published in accordance with Art. 153(4) EPC

(43) Date of publication:
**15.01.2025 Bulletin 2025/03**

(21) Application number: **22938824.4**

(22) Date of filing: **24.04.2022**

(51) International Patent Classification (IPC):
***C09J 171/02** (2006.01)* ***H01M 4/62** (2006.01)*

(52) Cooperative Patent Classification (CPC):
**C09J 171/02; H01M 4/62;** Y02E 60/10

(86) International application number:
**PCT/CN2022/088834**

(87) International publication number:
**WO 2023/205965 (02.11.2023 Gazette 2023/44)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Contemporary Amperex Technology (Hong Kong) Limited**
**Central, Central And Western District (HK)**

(72) Inventors:
- **LU, Lei**
  **Ningde, Fujian 352100 (CN)**
- **ZHU, Gaihong**
  **Ningde, Fujian 352100 (CN)**
- **WANG, Zheng**
  **Ningde, Fujian 352100 (CN)**
- **LI, Shisong**
  **Ningde, Fujian 352100 (CN)**

(74) Representative: **Jacob, Reuben Ellis et al**
**Maucher Jenkins**
**Seventh Floor Offices**
**Artillery House**
**11-19 Artillery Row**
**London SW1P 1RT (GB)**

# (54) NEGATIVE ELECTRODE COMPOSITION, NEGATIVE ELECTRODE SLURRY, NEGATIVE ELECTRODE PLATE, SECONDARY BATTERY, AND ELECTRICAL DEVICE COMPRISING SECONDARY BATTERY

(57) The present application discloses a negative electrode composition, a negative electrode slurry, a negative electrode plate, a secondary battery, and an electrical device comprising the secondary battery. The negative electrode composition comprises a negative electrode active material and a plasticizer, and the plasticizer comprises a polyether polyol. The negative electrode composition of the present application can effectively reduce the risk of cracking of a negative electrode film layer, and improve the electrolyte infiltration performance of the negative electrode plate, thereby improving the energy density, cycle performance and rate capability of the secondary battery.

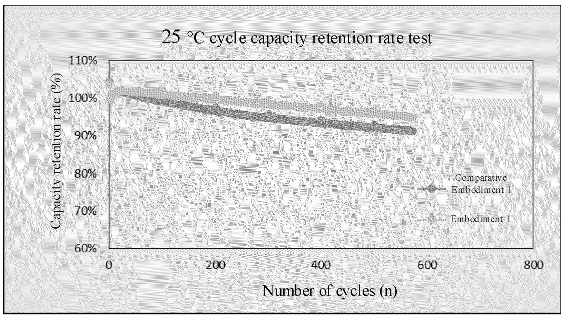


FIG. 4



Processed by Luminess, 75001 PARIS (FR)

## Description

### TECHNICAL FIELD

This application relates to the technical field of secondary batteries, and in particular, to a negative electrode composition, a negative electrode slurry, a negative electrode plate, a secondary battery, and an electrical device containing the secondary battery.

### BACKGROUND

A secondary battery is charged and discharged by reciprocally intercalating and deintercalating active ions between a positive electrode and a negative electrode, and is characterized by a high energy density, a long cycle life, no pollution, and no memory effect. Therefore, secondary batteries, as clean energy, have been gradually applied to a wide range of fields from electronic products to large-sized devices such as electric vehicles to meet the sustainable development strategy of the environment and energy. This also imposes higher requirements on the performance and the like of the secondary batteries.

The energy density is considered to be the biggest bottleneck that currently constrains the development of the secondary batteries. To achieve the technical goal of a high energy density of the secondary batteries, the manufacturing process needs to be continuously improved and perfected in addition to continuous breakthroughs and innovations in materials. With respect to the manufacturing of a secondary battery, increasing the thickness of a negative electrode film layer and increasing the coating speed are important approaches to increasing the energy density and production capacity of the secondary batteries.

However, with the increase in the thickness of the negative electrode film layer and the coating speed, the negative electrode film layer is prone to crack during drying. In addition, an excessive thickness of the negative electrode film layer may lead to problems such as infiltration difficulty of an electrolyte solution and low kinetics. Therefore, existing negative electrode plates still need to be improved.

### SUMMARY

An objective of this application is to provide a negative electrode composition, a negative electrode slurry, a negative electrode plate, a secondary battery, and an electrical device containing the secondary battery to achieve relatively high cycle performance in addition to a relatively high energy density of the secondary battery.

To achieve the above objective, a first aspect of this application provides a negative electrode composition. The negative electrode composition includes a negative active material and a plasticizer. The plasticizer includes a polyether polyol. Optionally, a molecular chain of the polyether polyol contains a polymerized segment that includes a repeating structural unit $-[O-CH_2-CH_2]-$, or $-[O-CH(CH_3)-CH_2]-$, or a combination of these units.

The negative electrode composition of this application includes a plasticizer, and the polyether polyol in the plasticizer not only reduces the surface tension of the solvent, but also interacts with the groups in a CMC molecule, thereby weakening the strong hydrogen bonding between CMC molecules. Therefore, when applied to a negative electrode slurry, the negative electrode composition of this application can effectively reduce the degree of cracking of the negative electrode film layer. In addition, the main chain of the polyether polyol contains a large number of ether bonds. The oxygen atoms in the ether bonds contain lone pairs of electrons, thereby making the polyether polyol highly affinitive toward the electrolyte solution on the one hand, and endowing the negative electrode film layer with high conductivity of lithium ions on the other hand. Therefore, when applied to the negative electrode slurry, the negative electrode composition of this application can effectively improve the electrolyte wettability of the negative electrode plate and the kinetic performance and C-rate performance of the secondary battery.

In any embodiment of this application, an average degree of polymerization of the polyether polyol is 8 to 120. Optionally, the average degree of polymerization of the polyether polyol is 12 to 50. Controlling the average degree of polymerization of the polyether polyol to fall within the above range not only effectively reduces the degree of cracking of the negative electrode film layer in the case of thick coating and high-speed coating, but also enables cost-effectiveness of the negative electrode composition of this application, thereby increasing the energy density and production capacity of the secondary battery.

In any embodiment of this application, the plasticizer includes polyethylene glycol, polypropylene glycol, or a copolymer thereof.

In polyethylene glycol (PEG), polypropylene glycol (PPG), or a copolymer thereof, the repeating structural unit $-[O-CH_2-CH_2]-$ and the repeating structural unit $-[O-CH(CH_3)-CH_2]-$ possess appropriate polarity and electronegativity, so that the PEG, the PPG, or a copolymer thereof is of a high affinity for the electrolyte solution and a high lithium-ion conductivity. Therefore, when applied to the negative electrode plate, the negative electrode composition of this

application endows the negative electrode plate with superior electrolyte wettability and a high lithium-ion conductivity, and in turn, endows the secondary battery with high C-rate performance and interface performance.

In any embodiment of this application, the polyether polyol includes an end group that assumes a structure represented by Formula 1:

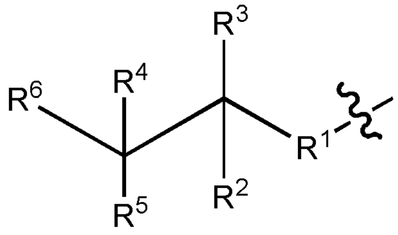

Formula 1

In Formula 1, $R^1$ represents

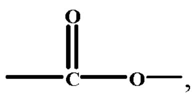, 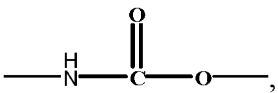,

or $-CH_2-O-$.

In Formula 1, $R^2$, $R^3$, $R^4$, $R^5$, and $R^6$ each independently represent hydrogen, halogen, or the following groups substituted or unsubstituted by $R^a$: $C_1$ to $C_8$ alkyl, $C_1$ to $C_8$ alkoxyl, $C_1$ to $C_8$ alkylthio, $C_2$ to $C_8$ alkenyl, $C_2$ to $C_8$ alkynyl, $C_3$ to $C_8$ alicyclyl, $C_2$ to $C_8$ heterocyclyl, $C_6$ to $C_{10}$ aryl, $C_3$ to $C_{10}$ heteroaryl, aldehyde, amido, $C_1$ to $C_8$ sulfonate ester group, $C_1$ to $C_8$ sulfinate ester group, $C_1$ to $C_8$ ester group, or $C_1$ to $C_8$ phosphate ester group.

$R^a$ represents at least one of $C_1$ to $C_8$ alkyl, $C_1$ to $C_8$ alkoxyl, $C_1$ to $C_8$ alkylthio, $C_2$ to $C_8$ alkenyl, $C_2$ to $C_8$ alkynyl, $C_3$ to $C_8$ alicyclyl, $C_2$ to $C_8$ heterocyclyl, $C_6$ to $C_{10}$ aryl, or $C_3$ to $C_{10}$ heteroaryl.

The polyether polyol includes the end group that assumes a structure represented by Formula 1, so that the polyether polyol is of a high affinity for the electrolyte solution. Therefore, the plasticizer of this application is not only dispersible between the polymer binder molecules and between the CMC molecules to produce a good plasticizing effect, but also provides superior electrolyte wettability. Therefore, when applied to the negative electrode slurry, the negative electrode composition of this application reduces the risk of cracking of the negative electrode film layer, improves the electrolyte wettability of the negative electrode plate, and in turn, improves the cycle performance of the secondary battery.

In any embodiment of this application, at least one of $R^2$, $R^3$, $R^4$, $R^5$, or $R^6$ represents a $C_1$ to $C_8$ ester group, a $C_1$ to $C_8$ sulfonate ester group, a $C_1$ to $C_8$ sulfinate ester group, an $R^a$-substituted $C_1$ to $C_8$ ester group, an $R^a$-substituted $C_1$ to $C_8$ sulfonate ester group, or an $R^a$-substituted $C_1$ to $C_8$ sulfinate ester group. The substituted or unsubstituted ester group and the substituted or unsubstituted sulfonate ester group are polar groups, and can further improve the plasticizing effect of the plasticizer, the electrolyte wettability of the negative electrode film layer, and the kinetic performance of the secondary battery.

In any embodiment of this application, $R^1$ represents

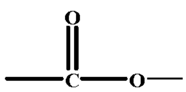

or

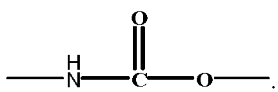.

$R^2$ and $R^4$ each independently represent a $C_1$ to $C_8$ ester group, a $C_1$ to $C_8$ sulfonate ester group, a $C_1$ to $C_8$ sulfinate ester group, an $R^b$-substituted $C_1$ to $C_8$ ester group, an $R^b$-substituted $C_1$ to $C_8$ sulfonate ester group, or an $R^b$-substituted $C_1$ to $C_8$ sulfinate ester group. $R^b$ represents at least one of $C_1$ to $C_8$ alkyl, $C_1$ to $C_8$ alkoxyl, $C_1$ to $C_8$ alkylthio, $C_2$ to $C_8$ alkenyl, or $C_2$ to $C_8$ alkynyl.

$R^3$, $R^5$, and $R^6$ each independently represent hydrogen, halogen, or the following groups substituted or unsubstituted by $R^b$:

$C_1$ to $C_8$ alkyl, $C_1$ to $C_8$ alkoxyl, $C_1$ to $C_8$ alkylthio, $C_2$ to $C_8$ alkenyl, $C_2$ to $C_8$ alkynyl, $C_1$ to $C_8$ sulfonate ester group, $C_1$ to $C_8$ sulfinate ester group, or $C_1$ to $C_8$ ester group.

$R^1$, $R^2$, $R^3$, $R^4$, $R^5$, and $R^6$ being selected from the above groups make the plasticizer more affinitive toward the electrolyte solution. Therefore, when applied to the negative electrode plate, the negative electrode composition of this application further improves the electrolyte wettability and the electrolyte retainability of the negative electrode plate, thereby improving the C-rate performance of the secondary battery. In addition, $R^1$, $R^2$, $R^3$, $R^4$, $R^5$, and $R^6$ being selected from the above groups improve the lithium ion conductivity of the plasticizer, and in turn, improve the lithium-ion conductivity of the negative electrode plate and the cycle performance of the secondary battery.

In any embodiment of this application, the structure represented by Formula 1 is one selected from the following Formula 1-A or Formula 1-B:

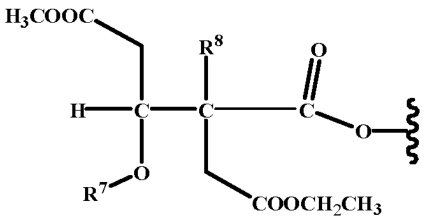

Formula 1-A;

or

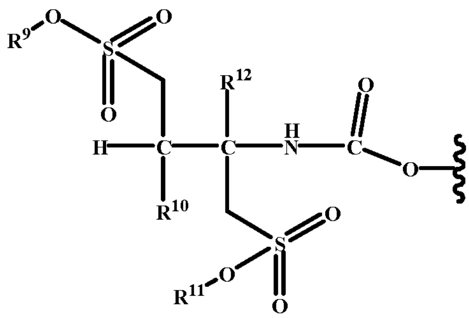

Formula 1-B.

In the formulas above, $R^7$, $R^8$, $R^9$, $R^{10}$, $R^{11}$, and $R^{12}$ each are independently selected from a $C_1$ to $C_5$ alkyl.

When the polyether polyol includes an end group that assumes the structure represented by Formula 1-A and/or Formula 1-B, the polar group in the end group can interact with the groups in the polymer binder and/or CMC to reduce the interaction sites between the polymer binder molecules and the interaction sites between the CMC molecules. Therefore, when applied to the negative electrode slurry, the negative electrode composition of this application effectively reduces the degree of warpage of the negative electrode plate during the drying, and in turn, reduces the risk of cracking of the film layer during the drying and calendering of the negative electrode plate. In addition, the polar group in the end group also improves the affinity of the polyether polyol for the electrolyte solution and the conductivity of lithium ions. In this way, the negative electrode plate that contains the negative electrode composition of this application exhibits superior electrolyte wettability and electrolyte retainability, and a low interfacial charge transfer resistance, thereby improving the cycle performance and C-rate performance of the secondary battery.

In any embodiment of this application, the polyether polyol is selected from compounds represented by Formula 2-A to Formula 2-J:

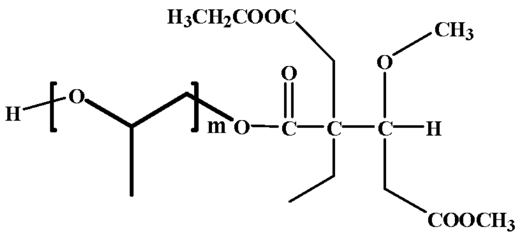

Formula 2-A;

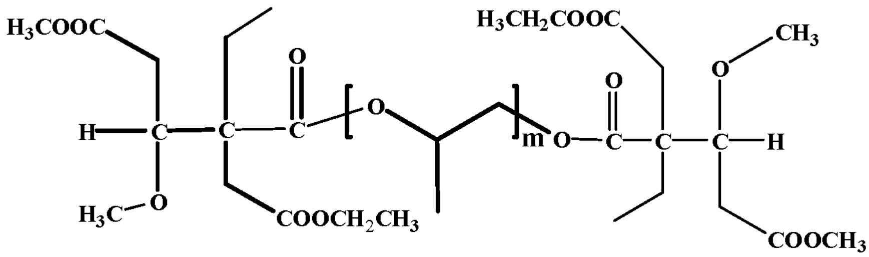

Formula 2-B;

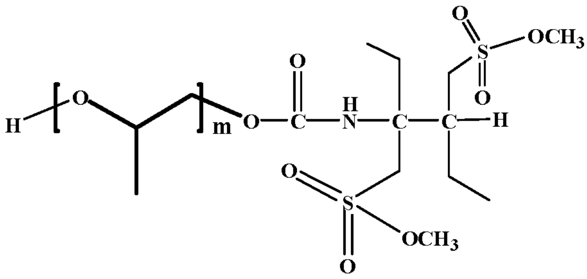

Formula 2-C;

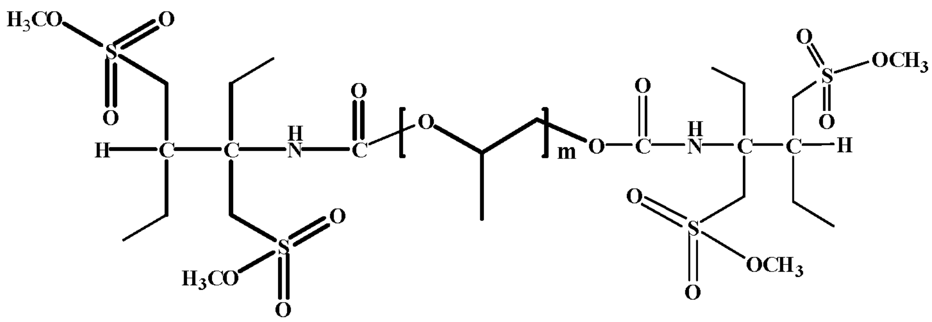

Formula 2-D;

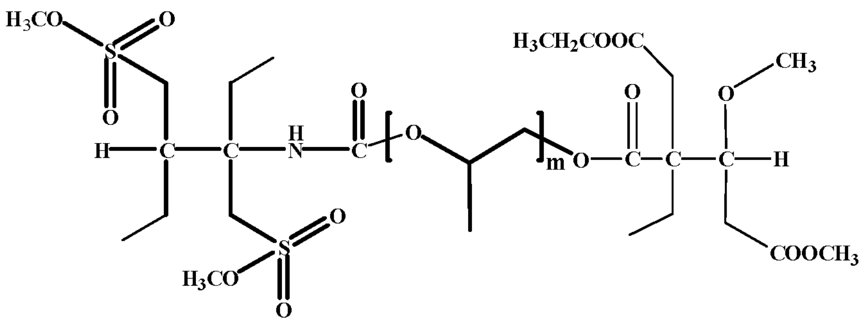

Formula 2-E;

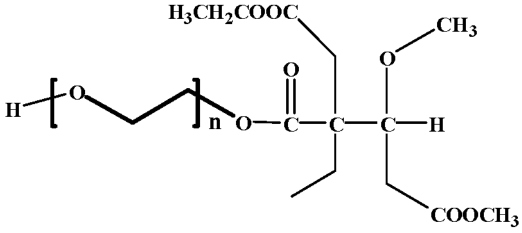

Formula 2-F;

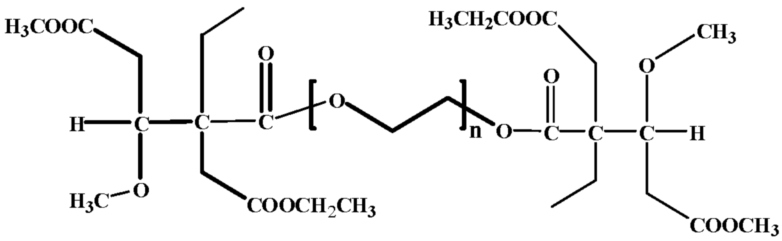

Formula 2-G;

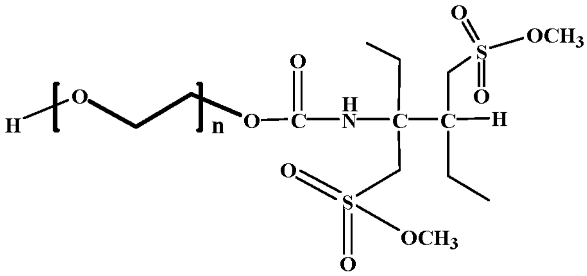

Formula 2-H;

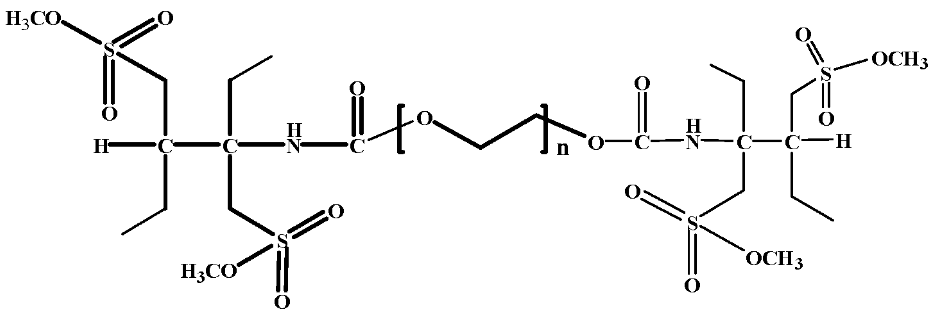

Formula 2-I;

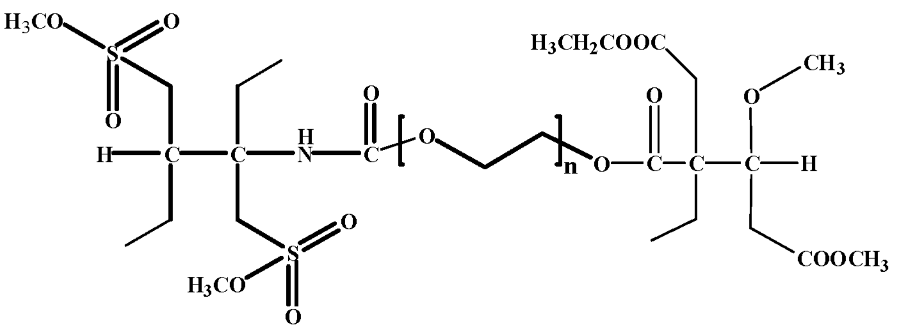

Formula 2-J.

In the formulas above, m independently represents an integer ranging from 12 to 50, and n independently represents an integer ranging from 8 to 120.

The polyether polyol is selected from the compounds represented by Formula 2-A to Formula 2-J, and the polar group in the end groups improves the plasticizing effect, electrolyte affinity, and lithium ion conductivity of the polyether polyol. Therefore, when applied to the negative electrode slurry, the negative electrode composition of this application reduces the degree of cracking of the negative electrode film layer in the case of ultra-thick coating and high-speed coating. In addition, the negative electrode plate that contains the negative electrode composition of this application exhibits superior electrolyte wettability and electrolyte retainability, and a low interfacial charge transfer resistance, thereby improving the energy density, cycle performance and C-rate performance of the secondary battery.

In any embodiment of this application, based on a total mass of the negative electrode composition, a mass percent of the plasticizer is 0.05% to 0.5%, optionally 0.1% to 0.4%, and further optionally 0.2% to 0.4%. When the mass percent of the plasticizer in the negative electrode composition falls within the above range, the degree of cracking of the negative electrode film layer is reduced on the one hand. On the other hand, the negative electrode plate containing the negative electrode composition of this application is made to be of high conductivity of lithium ions and electrons, thereby improving the energy density, C-rate performance, and cycle performance of the secondary battery.

In any embodiment of this application, the negative electrode composition further includes at least one of a

conductive agent, a binder, or a thickener. When the negative electrode composition containing at least one of the above additives is applied in the negative electrode slurry, the prepared negative electrode plate exhibits a high electrical conductivity and cycle stability.

A second aspect of this application provides a negative electrode slurry. The negative electrode slurry includes a solvent and the negative electrode composition according to any one of the embodiments in the first aspect of this application.

The negative electrode slurry of this application includes the corresponding constituents of the negative electrode composition of this application. Therefore, after the negative electrode slurry is applied to a negative current collector to form a slurry coating, the slurry coating generates just a relatively small drying stress during the drying, and the formed negative electrode film layer is highly flexible, thereby avoiding cracking of the negative electrode film layer during the drying. In addition, the negative electrode film layer formed from the negative electrode slurry of this application exhibits a high lithium-ion conductivity and superior electrolyte wettability. When applied to the secondary battery, the negative electrode film layer improves the cycle performance of the secondary battery.

In any embodiment of this application, the solvent is water.

In any embodiment of this application, a solid content of the negative electrode slurry is 45% to 58%. When the solid content of the negative electrode slurry falls within an appropriate range, it is convenient to control the coating concentration and the film layer thickness of the negative electrode plate, thereby endowing the negative electrode plate with a relatively high energy density and increasing the energy density of the secondary battery.

In any embodiment of this application, a viscosity of the negative electrode slurry is 4000 mPa·s to 15000 mPa·s. When the viscosity of the negative electrode slurry falls within an appropriate range, the thickness of the coating formed from the negative electrode slurry on the surface of the current collector is uniform, thereby reducing the risk of cracking of the negative electrode film layer caused by nonuniform drying stress in the coating.

In any embodiment of this application, a solid coating concentration of the negative electrode slurry is greater than or equal to 180 mg/1540.25 $mm^2$. The negative electrode composition of this application included in the negative electrode slurry reduces the drying stress of the negative electrode film layer, alleviates the nonuniformity of tension caused by the difference in the drying speed between different regions of the negative electrode plate, and in turn, reduces the degree of cracking of the negative electrode film layer.

In any embodiment of this application, a coating speed of the negative electrode slurry is greater than or equal to 50 m/min. Optionally, a coating speed of the negative electrode slurry is greater than or equal to 60 m/min. When the negative electrode slurry includes the negative electrode composition of this application, the flexibility of the formed negative electrode film layer can be improved, thereby reducing the risk of cracking of the negative electrode film layer.

A third aspect of this application provides a negative electrode plate, including a negative current collector and a negative electrode film layer located on at least one surface of the negative current collector. The negative electrode film layer includes the negative electrode composition according to any one of the embodiments in the first aspect of this application or a layer formed by drying the negative electrode slurry according to any one of the embodiments in the second aspect of this application.

In the negative electrode plate of this application, the negative electrode film layer includes the negative electrode composition of this application, or is formed by drying the negative electrode slurry of this application. Therefore, the negative electrode film layer is not prone to crack, and exhibits superior electrolyte wettability and a high lithium-ion conductivity. Therefore, when applied to a secondary battery, the negative electrode plate of this application can increase the production capacity of the secondary batteries, reduce the cost of the secondary battery, and ensure high cycle performance and C-rate performance of the secondary battery.

In any embodiment of this application, a thickness of the negative electrode film layer on a single side of the negative current collector is 80 μm to 120 μm. When the thickness of the negative electrode film layer falls within the above range, the negative electrode film layer can increase the energy density of the negative electrode plate, thereby increasing the energy density of the secondary battery. In the negative electrode plate of this application, the negative electrode film layer is not prone to crack and exhibits superior electrolyte wettability and electrolyte retainability. When the thickness of the negative active layer falls within the above range, the negative electrode plate of this application applied to a secondary battery can also contribute to high cycle performance, C-rate performance, and safety performance of the secondary battery.

In any embodiment of this application, a compaction density of the negative electrode film layer is 1.3 $g/cm^3$ to 1.7 $g/cm^3$. When the compaction density of the negative electrode film layer is controlled to fall within an appropriate range, the negative active material particles in the negative electrode film layer can contact each other closely, thereby increasing the content of the negative active material per unit volume, and in turn, increasing the energy density of the secondary battery.

In any embodiment of this application, a thickness of the negative current collector is less than or equal to 8 μm. Optionally, the thickness of the negative current collector is 4 μm to 6 μm. When the thickness of the negative current collector falls within an appropriate range, the secondary battery can achieve a relatively high energy density and conductivity.

A fourth aspect of this application provides a secondary battery. The secondary battery includes the negative electrode plate according to this application.

In the negative electrode plate of the secondary battery in this application, the negative electrode film layer includes the negative electrode composition of this application, or is formed by drying the negative electrode slurry of this application. Therefore, the negative electrode film layer is not prone to crack, and exhibits superior electrolyte wettability and a high lithium-ion conductivity. Therefore, when applied to a secondary battery, the negative electrode plate of this application can increase the production capacity of the secondary batteries, reduce the cost of the secondary battery, and ensure high cycle performance and C-rate performance of the secondary battery.

A fifth aspect of this application provides an electrical device. The electrical device includes at least one of the secondary battery, a battery module, or a battery pack according to this application.

The electrical device according to this application contains the secondary battery according to this application, and therefore, achieves at least the same advantages as the secondary battery.

## BRIEF DESCRIPTION OF DRAWINGS

To describe the technical solutions of the embodiments of this application more clearly, the following outlines the drawings used in the embodiments of this application. Evidently, the drawings outlined below are merely a part of embodiments of this application. A person of ordinary skill in the art may derive other drawings from the outlined drawings without making any creative efforts.

FIG. 1 is a schematic diagram of a secondary battery according to an embodiment of this application.

FIG. 2 is a schematic exploded view of a secondary battery according to an embodiment of this application;

FIG. 3 is a schematic diagram of a device that uses a secondary battery of this application as a power supply according to an embodiment of this application; and

FIG. 4 is a test diagram of a cycle capacity retention rate of a battery cycled under 25 °C according to Embodiment 1 versus Comparative Embodiment 1 of this application.

## DETAILED DESCRIPTION OF EMBODIMENTS

To make the objectives, technical solutions, and beneficial effects of this application clearer, the following describes this application in further detail with reference to embodiments. Understandably, the embodiments described in this specification are merely intended for interpreting this application but not intended to limit this application.

For brevity, just some of numerical ranges are expressly disclosed herein. However, any lower limit may be combined with any upper limit to form an unspecified range, any lower limit may be combined with any other lower limit to form an unspecified range, and any upper limit may be combined with any other upper limit to form an unspecified range. In addition, although not explicitly stated, any point and any single numerical value between end points of a range are included in the range. Therefore, each point or each single numerical value may be used as a lower limit or upper limit of the range to combine with any other point or other single numerical value or with any other lower or upper limit to form an unspecified range.

It is hereby noted that in the description herein, unless otherwise specified, a range defined by a numerical value qualified by "at least" or "at most" includes this numerical value, and the word "more" in the phrase "one or more of" means at least two.

In the description herein, unless otherwise specified, the term "or" is inclusive. For example, the expression "A or B" means "A alone, B alone, or both A and B". More specifically, all and any of the following conditions satisfy the condition "A or B": A is true (or existent) and B is false (or absent); A is false (or absent) and B is true (or existent); and, both A and B are true (or existent).

It needs to be understood that the relational terms such as "first", "second" are merely used to differentiate one entity or operation from another, but do not require or imply any actual relationship or sequence between the entities or operations.

The above summary of this application is not intended to describe every disclosed embodiment or every implementation of this application. The following description exemplifies illustrative embodiments in more detail. In several places throughout this application, guidance is provided through a series of embodiments. The embodiments may be used in various combinations. In each instance, an enumerated list serves merely as a representative list, but is not to be construed as an exclusive list.

### Negative electrode composition

As mentioned in the background section above, increasing the thickness of a negative electrode film layer and

increasing the coating speed are important approaches to improving the energy density and production capacity of the secondary batteries. However, with the increase in the thickness of the negative electrode film layer and the coating speed, the negative electrode film layer is prone to crack during drying. On the basis of the existing coating process, when the coating speed is increased from 40 m/min to 50 m/min or above, the negative electrode film layer may be cracked evidently during drying. The cracking of the negative electrode film layer not only reduces the yield rate of the negative electrode plates, increase the production cost of the negative electrode plates, reduce the production efficiency of the negative electrode plates, but also deteriorates the interface performance of the secondary battery, impairs the C-rate performance and cycle performance of the secondary battery. In severe cases, the cracking may even cause lithium plating during charging of the secondary battery, and pose safety hazards to the secondary battery. Especially, when the negative electrode plate adopts a thin current collector (the thickness of the current collector is less than or equal to 6 μm) and thick coating (the coating concentration on a single side is greater than 180 mg/1540.25 $mm^2$), the cracking of the film layer is more noticeable.

Through research, the inventor hereof finds that in the prior art, in order to solve the problem of cracking of the film layer caused by high-speed coating in a drying process, a general practice is to add a plasticizer at a mass percent less than 5 wt% into the negative electrode slurry. Examples of the plasticizer include: epoxy soybean oil substance, dihydric alcohol, ethylene carbonate, ethylene glycol monomethyl ether, ethylene glycol monoethyl ether, ethyl acetate, dimethyl carbonate, diethyl carbonate, ethyl methyl carbonate, propylene carbonate, ethylene carbonate, cyclohexanol, propylene glycol, cyclohexanone, nitrogen methyl pyrrolidone, N,N-dimethylacetamide, N,N-dimethylformamide, dimethyl sulfoxide, or the like. Such plasticizers boils at a high boiling point (higher than 180 °C), and can easily reside as residues in the negative electrode film layer to produce a plasticizing effect on the negative electrode film layer. However, the residues of the plasticizers produce an adverse effect on the secondary battery. For example, the residues of N-methyl-pyrrolidone corrode the negative current collector. The alcohol substances react parasitically with the electrolyte solution to deteriorate the performance of the battery, and in severe cases, may cause lithium plating during charging of the battery. In addition, the residues of the plasticizers in the negative electrode film layer may make it difficult for the electrolyte solution to infiltrate, hinder electrochemical reactions in the secondary battery, lead to lithium plating on the negative electrode plate, and result in safety hazards.

The related art also relates to a practice of adding isopropyl alcohol, p-chlorobenzotrifluoride, tert-butyl acetate, acetone, heptane, and other low-surface-tension solvents into the slurry to reduce the surface tension of the slurry system solvent and solve the problem of film cracking in the case of thick coating. However, the low-surface-tension solvent does not suppress the film cracking until the dosage of the solvent reaches 10 wt% or more. If the dosage of the low-surface-tension solvent is unduly large, the manufacturing cost is increased on the one hand. On the other hand, the overdose of the solvent impairs the stability and rheological property of the slurry, thereby increasing the risk of thick edges of the electrode plate. In addition, the boiling point of the low-surface-tension solvent is typically lower than that of water, thereby being prone to over-drying of the negative electrode plate in a drying process, and in turn, exacerbating the risk of film cracking at the edge of the electrode plate.

Through in-depth research, the inventor hereof discloses a negative electrode composition. The negative electrode composition includes a negative active material and a plasticizer. The plasticizer includes a polyether polyol. Optionally, a molecular chain of the polyether polyol contains a polymerized segment that includes a repeating structural unit $-[O-CH_2-CH_2]-$, or $-[O-CH(CH_3)-CH_2]-$, or a combination of these units.

In this application, the polyether polyol may include a homopolymer containing an ether bond in the main chain and/or a copolymer containing an ether bond in the main chain. When the polyether polyol includes a copolymer containing an ether bond in the main chain, the copolymer may include an alternating copolymer, a random copolymer, or a block copolymer. In this application, the polyether polyol may include an uncapped polyether polyol, an end-capped polyether polyol, or a combination thereof. The uncapped polyether polyol may mean a polyether polyol with an end group derived from the reacting constituents (such as monomers) that synthesize into the polyether polyol. As an example, the end group may be -OH. The end-capped polyether polyol may mean a polyether polyol obtained by reacting a compound reactive to the end group with an uncapped polyether polyol.

This application does not limit a negative active material. In some embodiments, the negative active material may be at least one selected from graphite, natural graphite, silicon, silicon-oxygen compound, silicon-carbon compound, hard carbon, MCMB, soft carbon, or tin.

The negative electrode slurry of the secondary battery is usually formed of a negative active material, a conductive agent, a thickener (such as carboxymethyl cellulose CMC) thickener, a binder (for example, made of acrylonitrile, acrylic acid, or acrylamide), and other additives mixed in a solvent. Through research, the inventor hereof finds that drying stress is an essential cause of cracking that occurs in a process of drying the negative electrode slurry coating to form a negative electrode film layer. Specifically, during the drying, any specified negative electrode slurry coating cracks when the thickness of the coating reaches a critical crack thickness. When the thickness of the negative electrode film layer is less than or equal to the critical crack thickness, the film layer does not crack. Therefore, the greater the critical crack thickness, the greater the upper-limit thickness of the negative electrode film layer, and accordingly, the

higher the energy density of the negative electrode plate. The critical crack thickness depends on physicochemical properties of the negative electrode slurry. The relationship between the physicochemical properties of the negative electrode slurry and the critical crack thickness may be represented by the Triumkudulu equation shown in Formula 1. In Formula 1, $h_{max}$ represents a critical crack thickness, $\varphi_{rcp}$ represents a random close packing fraction of the solid particles in a negative electrode slurry system, R represents a radius of solid particles in the negative electrode slurry system, M represents a ligancy in a solid particle molecule in the negative electrode slurry system, G represents a shear modulus of a solid particle in the negative electrode slurry system, and $\gamma$ represents the surface tension of the solvent in the negative electrode slurry.

$$h_{max} = 0.41(\frac{GM\emptyset_{rcp}R^3}{2\gamma})^{1/2} \quad \text{Formula 1}$$

This equation is based on the classical capillary theory. A capillary force generated during the drying of the negative electrode slurry coating primarily depends on the drying speed and the surface tension of the solvent. Therefore, decreasing the surface tension of the slurry solvent can alleviate the cracking of the negative electrode film layer that is being applied thickly or at a high speed. In addition, the inventor also finds that, during the drying of the negative electrode plate, the combined action of the surface tension of a curved liquid surface of the solvent, the capillary force, and the drying shrinkage of the binder (CMC, acrylonitrile, acrylic acid, or acrylamide) makes the solid particles in the negative electrode slurry come closer to each other and squeeze each other. Due to the bonding of the underlayer particles to the substrate, the negative electrode film layer is fixed in a horizontal direction. The stress generated by further shrinkage of the surface of the negative electrode film layer causes the negative electrode plate to warp. Therefore, the negative electrode film layer at the bend in the middle region of the negative electrode plate is prone to crack due to insufficient toughness. The warped edge region of the electrode plate is flattened during calendering. In this case, cracks still occur due to insufficient toughness of the negative electrode film layer.

Although the underlying mechanism still remains unclear, the inventor hereof unexpectedly finds that when the plasticizer includes a polyether polyol, the negative electrode composition of this application applied to form a negative electrode film layer of the negative electrode plate can effectively reduce the brittleness of the negative electrode film layer, and in turn, reduce the degree of cracking of the film layer during the drying of the negative electrode plate.

Without intending to be limited by any theory or explanation, it is found that, when the plasticizer includes a polyether polyol, the negative electrode composition of this application applied to the negative electrode slurry effectively reduces the risk of film cracking during the drying of the negative electrode plate. Specifically, the polyether polyol is evenly dispersed in the negative electrode slurry, thereby not only reducing the surface tension of the solvent, but also diffusing the polyether polyol to the clearance between the polymer binder molecules and the clearance between the CMC molecular chains, and in turn, increasing the distance between the polymer binder molecules and the distance between the CMC molecules. Therefore, during the drying, the polymer binder molecules and the CMC molecules can more easily implement a conformational transition to relax, so as to release the stress generated during the drying and increase the flexibility of the negative electrode film layer. In addition, the polar group in the polyether polyol interacts with the groups in the CMC molecules, thereby reducing the strong hydrogen bonding between the CMC molecules, and in turn, significantly reducing the stress of the negative electrode slurry during the drying, and making the shrinkage stress roughly equalized between different regions in the negative electrode film layer. Therefore, when applied to the negative electrode slurry, the negative electrode composition of this application significantly reduces the possibility of warpage of the negative electrode plate during the drying, thereby reducing the degree of cracking of the negative electrode film layer.

In addition, when the plasticizer includes a polyether polyol, because the polyether polyol boils at a relatively high boiling point and can reside in the negative electrode film layer, the negative electrode composition of this application applied to the negative electrode slurry can effectively reduce the risk of film cracking during calendering of the negative electrode plate. Specifically, a large number of ether bonds in the polyether polyol may act as soft segments of the molecular chain, thereby endowing the polyether polyol molecules with relatively high flexibility. Therefore, the polyether polyol residing in the negative electrode film layer can improve the flexibility of the negative electrode film layer, thereby reducing the risk of film cracking during calendering of the negative electrode plate.

Further, without intending to be limited by any theory or explanation, the inventor hereof also finds that, when the plasticizer includes a polyether polyol, the negative electrode composition of this application improves the electrolyte wettability of the negative electrode plate and the kinetic performance of the secondary battery. The main chain of the polyether polyol contains a large number of ether bonds. An oxygen atom in the ether bond contains a lone pair of electrons, thereby making the polyether polyol highly affinitive toward the electrolyte solution on the one hand, and on the other hand, enabling bonding with a vacant orbital of the lithium ion. In this way, a polyether polyol molecule can store and transmit lithium ions, thereby endowing the negative electrode film layer with a high conductivity of lithium ions. Therefore, when applied to the negative electrode slurry, the negative electrode composition of this application can effectively

improve the electrolyte wettability of the negative electrode plate and the kinetic performance and C-rate performance of the secondary battery.

When applied to a negative electrode slurry, the negative electrode composition of this application can change the kinetic and thermodynamic processes of solvent volatilization during the solidification of the negative electrode slurry, thereby further reducing the degree of cracking of the negative electrode film layer. In addition, the plasticizer that remains in the electrode plate is highly flexible innately, thereby increasing the flexibility of the negative electrode film layer and alleviating the cracking of the electrode plate during calendering. A polar functional group in the plasticizer is also highly affinitive toward the electrolyte solution and highly electronegative, and can improve the transport kinetics of lithium ions, thereby improving the electrolyte infiltration rate and electrolyte retention performance of the negative electrode plate. Therefore, when applied to a secondary battery, the negative electrode composition of this application shortens the infiltration time of the electrolyte solution for the negative electrode plate and increases the production capacity of the secondary battery on the one hand. On the other hand, the negative electrode composition can improve the interfacial properties of an electrode assembly and improve the kinetics and long-term cycle performance of the secondary battery. The negative electrode composition of this application is non-toxic and harmless, and remains in the negative electrode film layer without adversely affecting the performance of the secondary battery. Applied to a negative electrode slurry, the negative electrode composition does not need to be controlled or detected in a coating process, and does not need to be recycled by any recycling equipment, thereby reducing the manufacturing cost, equipment cost, and labor cost.

In some embodiments, an average degree of polymerization of the polyether polyol may be 8 to 120. For example, the average degree of polymerization of the polyether polyol may be 8, 12, 20, 50, 70, 90, 100, 120, or a value falling within a range formed by any two thereof. In some embodiments, an average degree of polymerization of the polyether polyol may be 12 to 50. For example, the average degree of polymerization of the polyether polyol may be 12, 15, 20, 25, 30, 35, 40, 45, 50, or a value falling within a range formed by any two thereof.

Without intending to be limited by any theory or explanation, controlling the average degree of polymerization of the polyether polyol to fall within the above range not only effectively reduces the degree of cracking of the negative electrode film layer in the case of thick coating and high-speed coating, but also enables cost-effectiveness of the negative electrode composition of this application, thereby increasing the energy density and production capacity of the secondary battery. Specifically, the inventor finds that, when the average degree of polymerization of the polyether polyol falls within the above range, it is ensured that the plasticizer molecules are evenly dispersed between the polymer binder molecules and between the CMC molecules, and interact with the polymer binder molecules and the CMC molecules so that an appropriate distance exists between the polymer binder molecules and between the CMC molecules, thereby reducing the strong intermolecular force between the polymer binder molecules and between the CMC molecules. Therefore, the CMC molecular chain can more easily undergo a conformational transition to achieve relaxation, so as to reduce the stress generated by the negative electrode film layer during the drying and reduce the probability of cracking of the negative electrode film layer. In addition, controlling the average degree of polymerization of the polyether polyol to fall within an appropriate range can facilitate adjustment of the dosage of the polyether polyol in the negative electrode composition, thereby enabling the plasticizer of this application to produce a good plasticizing effect and be cost-effective.

In some embodiments, the plasticizer may include polyethylene glycol (PEG), polypropylene glycol (PPG), or a copolymer thereof. In such plasticizers, the copolymer of the PEG and the PPG may include a block copolymer with a molecular chain containing a repeating structural unit $-[O-CH_2-CH_2]-$ and a repeating structural unit $-[O-CH(CH_3)-CH_2]-$.

Without intending to be limited by any theory or explanation, the inventor finds that, the repeating structural unit $-[O-CH_2-CH_2]-$ and the repeating structural unit $-[O-CH(CH_3)-CH_2]-$ possess appropriate polarity and electronegativity, so that the PEG, the PPG, or a copolymer thereof is of a high affinity for the electrolyte solution and a high lithium-ion conductivity. Therefore, when applied to the negative electrode plate, the negative electrode composition of this application endows the negative electrode plate with superior electrolyte wettability and a high lithium-ion conductivity, and in turn, endows the secondary battery with high C-rate performance and interface performance. In addition, the preparation process of the PEG and the PPG is mature, and the average degree of polymerization of the PEG and the PPG is easy to control. In this way, the plasticizer molecular chain possesses an appropriate molecular weight and an appropriate soft segment length, so as to be diffusible to the clearance between the polymer binder molecules and the clearance between the CMC molecular chains, and in turn, increase the distance between the polymer binder molecules and the distance between the CMC molecules. Therefore, during the drying, the polymer binder molecules and the CMC molecules can more easily implement a conformational transition to relax, so as to release the stress generated during the drying and increase the flexibility of the negative electrode film layer.

In some embodiments, the polyether polyol may include a capped polyether polyol. The polyether polyol may include an end group that assumes a structure represented by Formula 1:

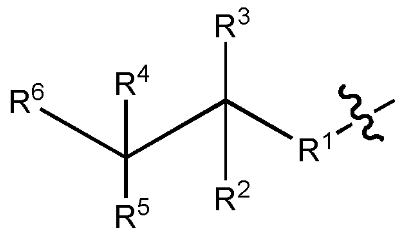

Formula 1

In Formula 1, $R^1$ may represents

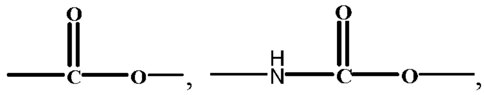

or - $CH_2$-O-.

$R^2$, $R^3$, $R^4$, $R^5$, and $R^6$ may be the same or different. $R^2$, $R^3$, $R^4$, $R^5$, and $R^6$ each may independently represent hydrogen, halogen, or the following groups substituted or unsubstituted by $R^a$:

$C_1$ to $C_8$ alkyl (for example, methyl, ethyl, propyl, isopropyl, n-butyl, isobutyl, sec-butyl, tert-butyl, n-pentyl, or isopentyl), $C_1$ to $C_8$ alkoxyl, $C_1$ to $C_8$ alkylthio, $C_2$ to $C_8$ alkenyl, $C_2$ to $C_8$ alkynyl, $C_3$ to $C_8$ alicyclyl (for example, cycloalkyl), $C_2$ to $C_8$ heterocyclyl, $C_6$ to $C_{10}$ aryl, $C_3$ to $C_{10}$ heteroaryl, aldehyde, amido, $C_1$ to $C_8$ sulfonate ester group, $C_1$ to $C_8$ sulfinate ester group, $C_1$ to $C_8$ ester group, or $C_1$ to $C_8$ phosphate ester group.

In the formula above, $R^a$ may represent at least one of $C_1$ to $C_8$ alkyl (for example, methyl, ethyl, propyl, isopropyl, n-butyl, isobutyl, sec-butyl, tert-butyl, n-pentyl, or isopentyl), $C_1$ to $C_8$ alkoxyl, $C_1$ to $C_8$ alkylthio, $C_2$ to $C_8$ alkenyl, $C_2$ to $C_8$ alkynyl, $C_3$ to $C_8$ alicyclyl (for example, cycloalkyl), $C_2$ to $C_8$ heterocyclyl, $C_6$ to $C_{10}$ aryl, or $C_3$ to $C_{10}$ heteroaryl.

An end group of a structure represented by Formula 1 may exist at one end or both ends of the molecular chain of the polyether polyol. Without intending to be limited by any theory or explanation, the polyether polyol includes the end group that assumes a structure represented by Formula 1, so that the polyether polyol is of a high affinity for the electrolyte solution. Therefore, the plasticizer of this application is not only dispersible between the polymer binder molecules and between the CMC molecules to produce a good plasticizing effect, but also provides superior electrolyte wettability. Therefore, when applied to the negative electrode slurry, the negative electrode composition of this application reduces the risk of cracking of the negative electrode film layer, improves the electrolyte wettability of the negative electrode plate, and in turn, improves the cycle performance of the secondary battery.

In some embodiments, at least one of $R^2$, $R^3$, $R^4$, $R^5$, or $R^6$ may represent a $C_1$ to $C_8$ ester group, a $C_1$ to $C_8$ sulfonate ester group, a $C_1$ to $C_8$ sulfinate ester group, an $R^a$-substituted $C_1$ to $C_8$ ester group, an $R^a$-substituted $C_1$ to $C_8$ sulfonate ester group, or an $R^a$-substituted $C_1$ to $C_8$ sulfinate ester group.

Without intending to be limited by any theory or explanation, the substituted or unsubstituted ester group and the substituted or unsubstituted sulfonate ester group are polar groups, and can further improve the plasticizing effect of the plasticizer, the electrolyte wettability of the negative electrode film layer, and the kinetic performance of the secondary battery. Specifically, the polar group can interact with the polymer binder molecules and the CMC molecules to weaken the strong hydrogen bonding between the polymer binder molecules and between the CMC molecules. Therefore, during the drying, the polymer binder molecules and the CMC molecules can more easily undergo a conformational transition to achieve relaxation, so as to release the stress generated during the drying and increase the flexibility of the negative electrode film layer. Further, the ester group, sulfonate ester group, and/or sulfinate ester group included in the plasticizer endows the plasticizer with a high affinity for the electrolyte solution and a relatively high lithium-ion conductivity, ensures the negative electrode film layer to be well infiltrated by the electrolyte solution, reduces the interfacial charge transfer resistance of the negative electrode plate, and in turn, improves the C-rate performance and cycle performance of the secondary battery.

In some embodiments, in Formula 1, $R^1$ may represent

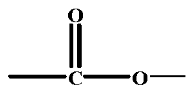

or

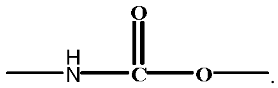

$R^2$ and $R^4$ each may independently represent a $C_1$ to $C_8$ ester group, a $C_1$ to $C_8$ sulfonate ester group, a $C_1$ to $C_8$ sulfinate ester group, an $R^b$-substituted $C_1$ to $C_8$ ester group, an $R^b$-substituted $C_1$ to $C_8$ sulfonate ester group, or an $R^b$-substituted $C_1$ to $C_8$ sulfinate ester group. $R^3$, $R^5$, and $R^6$ each may independently represent hydrogen, halogen, or the following groups substituted or unsubstituted by $R^b$: $C_1$ to $C_8$ alkyl (for example, methyl, ethyl, propyl, isopropyl, n-butyl, isobutyl, sec-butyl, tert-butyl, n-pentyl, or isopentyl), $C_1$ to $C_8$ alkoxyl, $C_1$ to $C_8$ alkylthio, $C_2$ to $C_8$ alkenyl, $C_2$ to $C_8$ alkynyl, $C_1$ to $C_8$ sulfonate ester group, $C_1$ to $C_8$ sulfinate ester group, or $C_1$ to $C_8$ ester group.

In the formula above, $R^b$ may represent at least one of $C_1$ to $C_8$ alkyl, $C_1$ to $C_8$ alkoxyl, $C_1$ to $C_8$ alkylthio, $C_2$ to $C_8$ alkenyl, or $C_2$ to $C_8$ alkynyl.

Without intending to be limited by any theory or explanation, $R^1$, $R^2$, $R^3$, $R^4$, $R^5$, and $R^6$ being selected from the above groups make the plasticizer more affinitive toward the electrolyte solution. Therefore, when applied to the negative electrode plate, the negative electrode composition of this application further improves the electrolyte wettability and the electrolyte retainability of the negative electrode plate, thereby improving the C-rate performance of the secondary battery. In addition, $R^1$, $R^2$, $R^3$, $R^4$, $R^5$, and $R^6$ being selected from the above groups improve the lithium ion conductivity of the plasticizer, and in turn, improve the lithium-ion conductivity of the negative electrode plate and the cycle performance of the secondary battery.

In some embodiments, the structure represented by Formula 1 may be one selected from the following Formula 1-A or Formula 1-B:

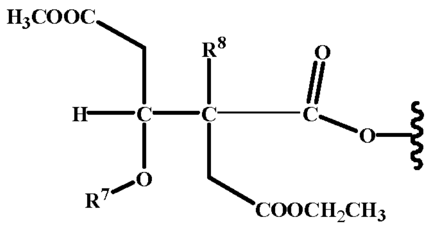

Formula 1-A;

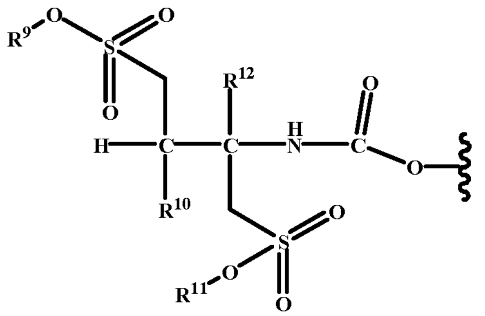

Formula 1-B

In the formulas above, $R^7$, $R^8$, $R^9$, $R^{10}$, $R^{11}$, and $R^{12}$ may be the same or different. $R^7$, $R^8$, $R^9$, $R^{10}$, $R^{11}$, and $R^{12}$ each may be independently selected from a $C_2$ to $C_5$ alkyl.

In the negative electrode composition of this application, when the polyether polyol includes an end group that assumes the structure represented by Formula 1-A and/or Formula 1-B, the polar group in the end group can interact with the groups in the polymer binder and/or CMC to replace the interaction between the polymer binder molecules and the interaction between the thickener molecules, thereby reducing the interaction sites between the polymer binder molecules and the interaction sites between the CMC molecules. Therefore, when applied to the negative electrode slurry, the negative electrode composition of this application effectively reduces the degree of warpage of the negative electrode plate during the drying, and in turn, reduces the risk of cracking of the film layer during the drying and calendering of the negative electrode plate. In addition, the polar group in the end group also improves the affinity of the polyether polyol for the electrolyte solution and the conductivity of lithium ions. In this way, the negative electrode plate that contains the negative electrode composition of this application exhibits superior electrolyte wettability and electrolyte retainability, and a low interfacial charge transfer resistance, thereby improving the cycle performance and C-rate performance of the secondary battery.

In some embodiments, the polyether polyol may be selected from compounds represented by Formula 2-A to Formula 2-J:

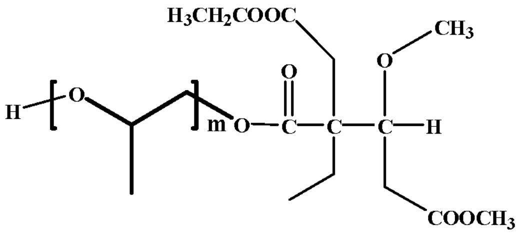

Formula 2-A;

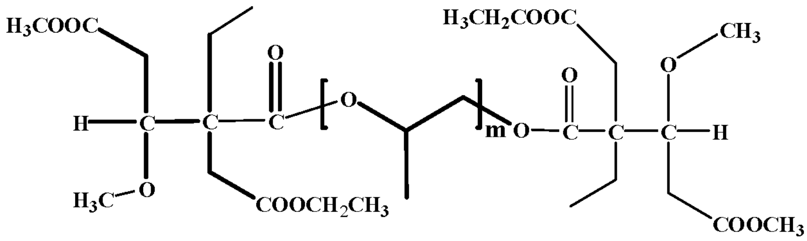

Formula 2-B;

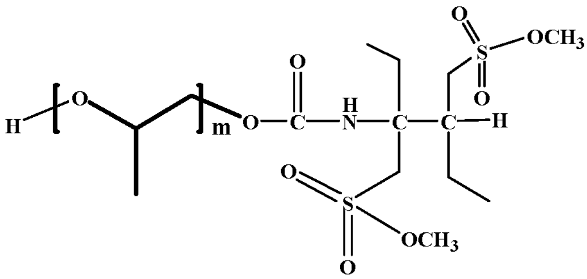

Formula 2-C;

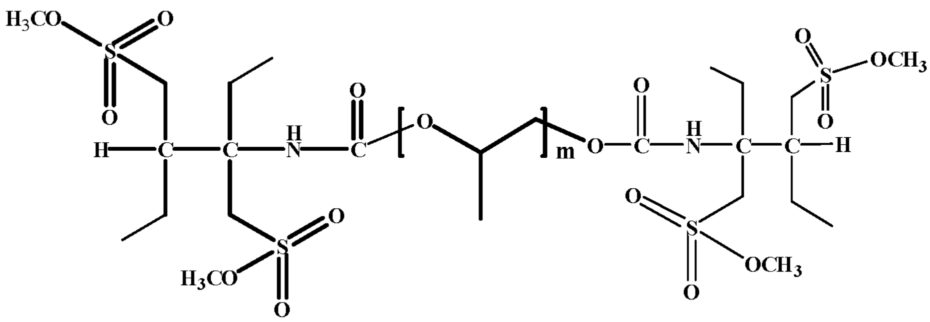

Formula 2-D;

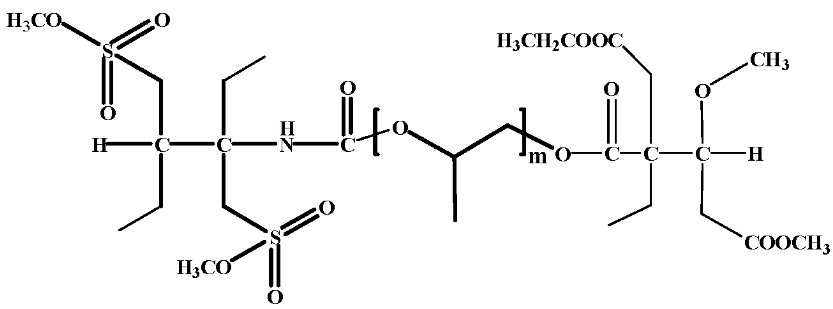

Formula 2-E;

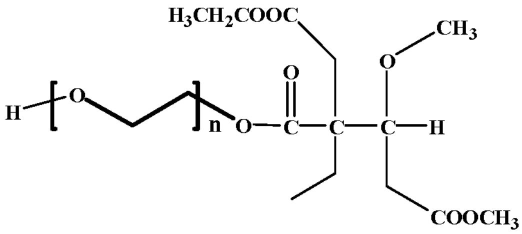
Formula 2-F;

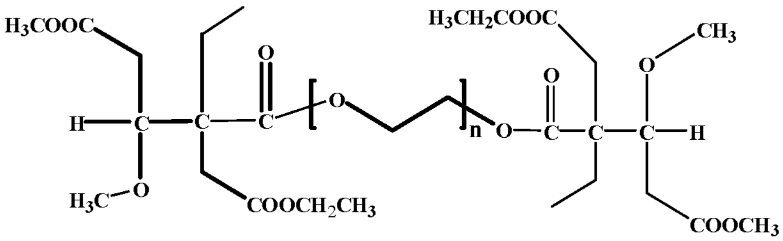
Formula 2-G;

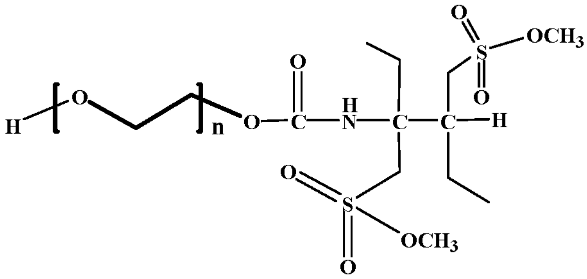
Formula 2-H;

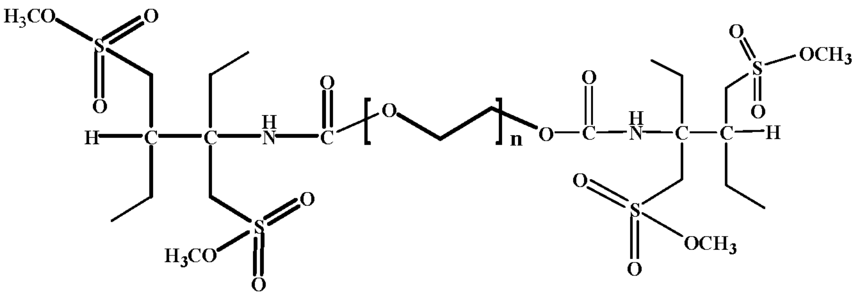
Formula 2-I;

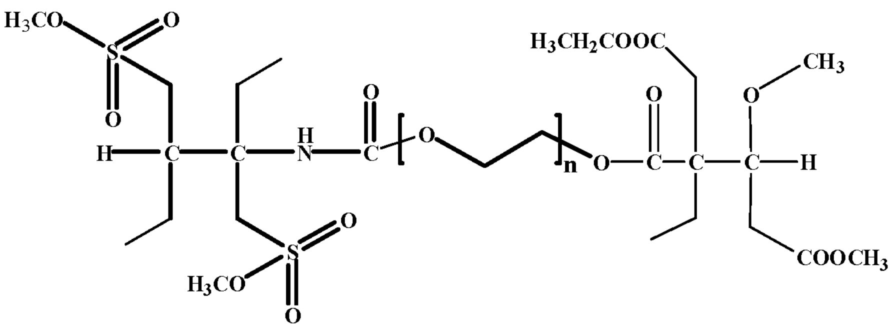
Formula 2-J.

In the formulas above, m may independently represent an integer ranging from 12 to 50. For example, m may be 12, 15, 20, 25, 30, 35, 40, 45, 50, or a value falling within a range formed by any two thereof. n may independently represent an integer ranging from 8 to 120. For example, n may be 8, 12, 20, 50, 70, 90, 100, 120, or a value falling within a range formed by any two thereof.

In the negative electrode composition of this application, the polyether polyol is selected from the compounds represented by Formula 2-A to Formula 2-J, and the polar group in the end groups improves the plasticizing effect, electrolyte affinity, and lithium ion conductivity of the polyether polyol. Therefore, when applied to the negative electrode

slurry, the negative electrode composition of this application reduces the degree of cracking of the negative electrode film layer in the case of ultra-thick coating and high-speed coating. In addition, the negative electrode plate that contains the negative electrode composition of this application exhibits superior electrolyte wettability and electrolyte retainability, and a low interfacial charge transfer resistance, thereby improving the energy density, cycle performance and C-rate performance of the secondary battery.

In some embodiments, based on the total mass of the negative electrode composition, the mass percent of the plasticizer may be 0.05% to 0.5%, 0.1% to 0.5%, 0.1% to 0.45%, 0.1% to 0.4%, 0.15% to 0.4%, 0.2% to 0.4%, or 0.25% to 0.4%. For example, the mass percent of the plasticizer may be 0.05%, 0.1%, 0.15%, 0.2%, 0.25%, 0.3%, 0.35%, 0.4%, 0.45%, 0.5%, or a value falling within a range formed by any two thereof.

Without being bound by any theory or explanation, when the mass percent of the plasticizer in the negative electrode composition falls within the above range, on the one hand, the negative electrode composition applied to the negative electrode slurry is caused to form a slurry coating that generates a relatively small stress during the drying, thereby reducing the degree of cracking of the negative electrode film layer. On the other hand, the negative electrode plate containing the negative electrode composition of this application exhibits a high conductivity of lithium ions and electrons, thereby reducing the interfacial charge transfer resistance of the negative electrode plate, and in turn, improving the C-rate performance and cycle performance of the secondary battery.

In some embodiments, the negative electrode composition further includes at least one of a conductive agent, a binder, or a thickener. Specifically, the conductive agent may be at least one selected from superconducting carbon black, acetylene black, or carbon nanotubes. The thickener may be at least one selected from sodium carboxymethyl cellulose or lithium carboxymethyl cellulose. The binder may be at least one selected from emulsion-type SBR or solution-type acrylamide/acrylonitrile. When the negative electrode composition containing at least one of the above additives is applied in the negative electrode slurry, the prepared negative electrode plate exhibits a high electrical conductivity and cycle stability.

In some embodiments, based on the total mass of the negative electrode composition, a mass percent of the plasticizer may be 0.05% to 0.5%, and specifically, may be 0.05%, 0.1%, 0.15%, 0.2%, 0.25%, 0.3%, 0.35%, 0.4%, 0.45%, or 0.5%. The mass percent of the negative active material may be 90% to 98%. The mass percent of the conductive agent may be 0.3% to 5%. The mass percent of the binder may be 0.8% to 2.5%. The mass percent of the thickener may be 0.8% to 2.5%.

Not intending to be bound by any theory or explanation, the inventor finds that, by controlling the mass percent of each constituent in the negative electrode composition to fall within the above range, the plasticizer can not only exert a high plasticizing effect, make the negative electrode film layer not prone to crack, and increase the production capacity of the negative electrode plate, but also ensure the negative electrode plate to exhibit a relatively high conductivity of lithium ions and electrons. Therefore, when applied in a secondary battery, the negative electrode plate containing the negative electrode composition can significantly improve the energy density, C-rate performance, and cycle performance of the battery.

It is hereby noted that, in the negative electrode composition of this application, the plasticizer may be obtained in various ways, for example, prepared by a method known in the art.

In some embodiments, the plasticizer may include an end-capped or uncapped PEG. As an example, the uncapped PEG may be prepared by the following steps: mixing ethylene glycol and a catalyst trimethylamine in an $N_2$ atmosphere; heating the mixture to a specified temperature (for example, 140 °C), adding ethylene oxide to react the ethylene glycol with the ethylene oxide, where the amount of substance of the ethylene oxide in the reaction system is greater than the amount of substance of the ethylene glycol; post-treating the reaction product, for example, cooling the reaction product to a temperature of 90 °C to 100 °C, pumping in water that accounts for approximately 1% of the total mass of the reactants, and then vacuumizing to remove the water from the system, and cooling down to a temperature of 60 °C to 80 °C to obtain uncapped PEG. As an example, the end-capped PEG may be obtained by reacting uncapped PEG with carboxylic acid, isocyanate ester, or halogenated hydrocarbon.

In some embodiments, the plasticizer may include an end-capped or uncapped PPG. As an example, the uncapped PPG may be prepared by the following steps: reacting glycerol and propylene oxide under the catalysis of potassium hydroxide at a specified temperature and pressure (for example, 90 °C to 95 °C, 0.4 MPa to 0.5 MPa); cooling down to 60 °C to 70 °C, adding water while stirring, so as to dissolve excess potassium hydroxide; adding an appropriate amount of phosphoric acid to adjust the pH value of the solution to 6 to 7; slowly heating up to 110 °C to 120 °C, vacuum-dehydrating and filtering the mixture to obtain uncapped PPG. As an example, the end-capped PPG may be obtained by reacting uncapped PPG with carboxylic acid, isocyanate ester, or halogenated hydrocarbon.

**Negative electrode slurry**

A second aspect of this application provides a negative electrode slurry. The negative electrode slurry includes a solvent and the negative electrode composition according to this application.

The negative electrode slurry of this application includes the corresponding constituents of the negative electrode composition of this application. Therefore, after the negative electrode slurry is applied to a negative current collector to form a slurry coating, the slurry coating generates just a relatively small drying stress during the drying, and the formed negative electrode film layer is highly flexible, thereby avoiding cracking of the negative electrode film layer during the drying. In addition, the negative electrode film layer formed from the negative electrode slurry of this application exhibits a high lithium-ion conductivity and superior electrolyte wettability. When applied to the secondary battery, the negative electrode film layer improves the cycle performance of the secondary battery.

In some embodiments, the solvent may be water. Specifically, the solvent may be deionized water.

In some embodiments, a solid content of the negative electrode slurry may be 45% to 58%. When the solid content of the negative electrode slurry falls within an appropriate range, it is convenient to control the coating concentration and the film layer thickness of the negative electrode plate, thereby endowing the negative electrode plate with a relatively high energy density and increasing the energy density of the secondary battery.

In some embodiments, a viscosity of the negative electrode slurry may be 4000 mPa s to 15000 mPa·s. When the viscosity of the negative electrode slurry falls within an appropriate range, the thickness of the coating formed from the negative electrode slurry on the surface of the current collector is uniform, thereby reducing the risk of cracking of the negative electrode film layer caused by nonuniform drying stress in the coating.

In some embodiments, the solid coating concentration of the negative electrode slurry may be greater than or equal to 180 mg/1540.25 $mm^2$. Optionally, the solid coating concentration of the negative electrode slurry may be greater than or equal to 210 mg/1540.25 $mm^2$. The negative electrode composition of this application included in the negative electrode slurry reduces the drying stress of the negative electrode film layer, alleviates the nonuniformity of tension caused by the difference in the drying speed between different regions of the negative electrode plate, and in turn, reduces the degree of cracking of the negative electrode film layer. Even under an ultra-thick coating condition that the coating concentration of the negative electrode slurry in this application is greater than or equal to 210 mg/1540.25 $mm^2$, the formed negative electrode film layer is still not prone to crack.

In some embodiments, a coating speed of the negative electrode slurry may be greater than or equal to 50 m/min. Optionally, the coating speed of the negative electrode slurry may be greater than or equal to 60 m/min. When the negative electrode slurry includes the negative electrode composition of this application, the flexibility of the formed negative electrode film layer can be improved, thereby reducing the risk of cracking of the negative electrode film layer. Even under a high-speed coating condition that the coating speed of the negative electrode slurry in this application is greater than or equal to 50 m/min, the formed negative electrode film layer is still not prone to crack.

**Method for preparing a negative electrode slurry**

This application further provides a method for preparing a negative electrode slurry of this application. The method includes: mixing well a solvent with a negative electrode material that includes the negative electrode composition of this application to obtain a negative electrode slurry.

In some embodiments, the solvent may be water. Specifically, the solvent may be deionized water.

In some embodiments, a solid content of the negative electrode slurry may be 45% to 58%. When the solid content of the negative electrode slurry falls within an appropriate range, it is convenient to control the coating concentration and the film layer thickness of the negative electrode plate, thereby endowing the negative electrode plate with a relatively high energy density and increasing the energy density of the secondary battery.

In some embodiments, a viscosity of the negative electrode slurry may be 4000 mPa·s to 15000 mPa·s. When the viscosity of the negative electrode slurry falls within an appropriate range, the thickness of the coating formed from the negative electrode slurry on the surface of the current collector is uniform, thereby reducing the risk of cracking of the negative electrode film layer caused by nonuniform drying stress in the coating.

In some embodiments, the solid coating concentration of the negative electrode slurry may be greater than or equal to 180 mg/1540.25 $mm^2$. Optionally, the solid coating concentration of the negative electrode slurry may be greater than or equal to 210 mg/1540.25 $mm^2$. The negative electrode composition of this application included in the negative electrode slurry reduces the drying stress of the negative electrode film layer, alleviates the nonuniformity of tension caused by the difference in the drying speed between different regions of the negative electrode plate, and in turn, reduces the degree of cracking of the negative electrode film layer. Even under an ultra-thick coating condition that the coating concentration of the negative electrode slurry in this application is greater than or equal to 180 mg/1540.25 $mm^2$, the formed negative electrode film layer is still not prone to crack.

In some embodiments, a coating speed of the negative electrode slurry may be greater than or equal to 50 m/min. Optionally, the coating speed of the negative electrode slurry may be greater than or equal to 60 m/min. When the negative electrode slurry includes the negative electrode composition of this application, the flexibility of the formed negative electrode film layer can be improved, thereby reducing the risk of cracking of the negative electrode film layer. Even under a high-speed coating condition that the coating speed of the negative electrode slurry in this application is greater than or

equal to 60 m/min, the formed negative electrode film layer is still not prone to crack.

**Negative electrode plate**

A third aspect of this application provides a negative electrode plate. The negative electrode plate includes a negative current collector and a negative electrode film layer located on at least one surface of the negative current collector. The negative electrode film layer includes the negative electrode composition of this application, or the negative electrode film layer is a layer formed by drying the negative electrode slurry of this application.

In the secondary battery of this application, the negative current collector may be a metal foil or a composite current collector (formed by disposing a metal material on a polymer substrate). As an example, the negative current collector may be a copper foil.

In the secondary battery of this application, the negative electrode film layer may be disposed on one side of the negative current collector or both sides of the negative current collector. For example, the negative current collector includes two sides opposite to each other in a thickness direction of the current collector. The negative electrode film layer is disposed on either or both of the two opposite sides of the negative current collector.

In the negative electrode plate of this application, the negative electrode film layer includes the negative electrode composition of this application, or is formed by drying the negative electrode slurry of this application. Therefore, the negative electrode film layer is not prone to crack, and exhibits superior electrolyte wettability and a high lithium-ion conductivity. Therefore, when applied to a secondary battery, the negative electrode plate of this application can increase the production capacity of the secondary batteries, reduce the cost of the secondary battery, and ensure high cycle performance and C-rate performance of the secondary battery.

In some embodiments of this application, the thickness of the negative electrode film layer on a single side of the negative current collector may be 80 μm to 120 μm. When the thickness of the negative electrode film layer falls within the above range, the negative electrode film layer can increase the energy density of the negative electrode plate, thereby increasing the energy density of the secondary battery. In the negative electrode plate of this application, the negative electrode film layer is not prone to crack and exhibits superior electrolyte wettability and electrolyte retainability. When the thickness of the negative active layer falls within the above range, the negative electrode plate of this application applied to a secondary battery can also contribute to high cycle performance, C-rate performance, and safety performance of the secondary battery.

In some embodiments, the compaction density of the negative electrode film layer may be 1.3 $g/cm^3$ to 1.7 $g/cm^3$. When the compaction density of the negative electrode film layer is controlled to fall within an appropriate range, the negative active material particles in the negative electrode film layer can contact each other closely, thereby increasing the content of the negative active material per unit volume, and in turn, increasing the energy density of the secondary battery.

In some embodiments, the thickness of the negative current collector may be less than or equal to 8 μm. Specifically, the thickness of the negative current collector may be 4 μm to 6 μm. When the thickness of the negative current collector falls within an appropriate range, the secondary battery can achieve a relatively high energy density and conductivity.

It is hereby noted that the parameter ranges of the negative electrode film layer (such as film thickness and compaction density) specified herein mean the parameter ranges of a single-side film layer. When the negative electrode film layer is disposed on both sides of the negative current collector, the resulting technical solution falls within the protection scope of this application as long as the parameters of the film layer on any one side of the negative current collector satisfy the parameter settings specified herein. The film layer thickness, compaction density, and other parameters of the film layer mentioned in this application mean the parameters of a film layer compacted by cold pressing and ready for use in a battery to be assembled.

In addition, in the secondary battery according to this application, the negative electrode plate does not exclude other additional functional layers other than the negative electrode film layer. For example, in some embodiments, the negative electrode plate according to this application may further include a conductive undercoat (for example, formed of a conductive agent and a binder) disposed between the negative current collector and the second negative electrode film layer. In other embodiments, the negative electrode plate according to this application further includes a protection layer overlaying the surface of the first negative electrode film layer.

In this application, the thickness of the negative electrode film layer bears a meaning well-known in the art, and may be measured by a method known in the art, for example, by using a ten-thousandth micrometer (such as a Mitutoyo 293-100 micrometer accurate to within 0.1 μm).

In this application, the compaction density of the negative electrode film layer bears a meaning well-known in the art, and may be measured by a method known in the art. Compaction density of the negative electrode film layer = areal density of the negative electrode film layer/thickness of the negative electrode film layer. In the formula above, the areal density of the negative electrode film layer bears a meaning well-known in the art, and may be measured by a method known in the art. An exemplary measurement method includes: taking a cold-pressed negative electrode plate coated on a

single side, die-cutting the electrode plate into specimens of small discs, where the area of each disc is $S_1$; weighing a specimen, and recording the weight as $M_1$; die-cutting the uncoated negative current collector into specimens of small discs, where the area of each disc is $S_1$; and weighing a specimen of the negative current collector, and recording the weight as $M_0$; and calculating the areal density of the negative electrode film layer as: areal density = $(M_1 - M_0)/S_1$, or, if the negative electrode plate is coated on both sides, calculating the areal density as: areal density = $(M_1 - M_0)/2S_1$, where $M_1$ is the weight of the negative electrode plate, and $M_0$ is the weight of the negative current collector.

It is hereby noted that the parameters of the negative electrode film layer or the negative active material may be tested by sampling during preparation of the batteries, or may be tested by sampling the prepared secondary batteries.

As an example, when the specimen is taken from a prepared secondary battery, the sampling may be performed according to the following steps S10 to S30:

S10. Discharging the secondary battery (for safety reasons, the battery is generally caused to be in a fully discharged state); disassembling the battery and taking out a negative electrode plate; soaking the negative electrode plate in dimethyl carbonate (DMC) for a period (for example, 2 to 10 hours); and then taking out the negative electrode plate, drying the negative electrode plate at a specified temperature for a specified time (for example, at 60 °C for 4 hours), and taking out the dried negative electrode plate. At this time, specimens may be taken from the dried negative electrode plate to test various parameters related to the negative electrode film layer of this application.

S20. Baking, at a specified temperature for a specified time (for example, at 400 °C for 2 hours), the negative electrode plate dried in step S10; selecting a region on the baked negative electrode plate randomly, and taking specimens of the negative active material (for example, by scraping powder with a scraper).

S30. Sieving the negative active material collected in step S20 (for example, through a 200-mesh sieve) to finally obtain specimens available for testing the parameters of the negative active material of this application.

**Secondary battery**

A secondary battery, also known as a rechargeable battery or storage battery, is a battery that is reusable after an active material in the battery is activated by charging the battery that has been discharged.

Generally, a secondary battery includes a positive electrode plate, a negative electrode plate, a separator, and an electrolyte. During charge and discharge of the battery, active ions (such as lithium ions) are shuttled between the positive electrode plate and the negative electrode plate by intercalation and deintercalation. Disposed between the positive electrode plate and the negative electrode plate, the separator primarily serves to prevent a short circuit between the positive electrode plate and the negative electrode plate while allowing passage of ions. The electrolyte primarily serves to conduct the active ions between the positive electrode plate and the negative electrode plate.

**[Negative electrode plate]**

The secondary battery includes the negative electrode plate according to the third aspect of this application.

**[Positive electrode plate]**

In the secondary battery according to this application, the positive electrode plate includes a positive current collector and a positive electrode film layer disposed on at least one surface of the positive current collector and containing a positive active material. For example, the positive current collector includes two surfaces opposite to each other in a thickness direction thereof. The positive electrode film layer is disposed on either or both of the two opposite surfaces of the positive current collector.

In the secondary battery according to this application, the positive active material may be a well-known positive active material for use in a secondary battery in the art. As an example, the positive active material may include one or more of lithium transition metal oxide, olivine-structured lithium-containing phosphate, or a modified compound thereof. Examples of the lithium transition metal oxide may include, but are not limited to, one or more of lithium cobalt oxide, lithium nickel oxide, lithium manganese oxide, lithium nickel cobalt oxide, lithium manganese cobalt oxide, lithium nickel manganese oxide, lithium nickel cobalt manganese oxide, lithium nickel cobalt aluminum oxide, or a modified compound thereof. Examples of the olivine-structured lithium-containing phosphate include, but are not limited to, one or more of lithium iron phosphate, a composite of lithium iron phosphate and carbon, lithium manganese phosphate, a composite of lithium manganese phosphate and carbon, lithium manganese iron phosphate, or a composite of lithium manganese iron phosphate and carbon, or a modified compound thereof. This application is not limited to such materials, and other conventional materials well-known for use as a positive active material of a secondary battery may be used instead.

In the secondary battery according to this application, the positive electrode film layer generally includes a positive active material, and optionally a binder, and optionally a conductive agent; and is generally formed by applying a positive electrode slurry onto a substrate and then drying and cold-pressing the slurry. The positive electrode slurry is

generally formed by dispersing the positive active material, and optionally a conductive agent, and optionally a binder, and other additives into a solvent and then stirring well. The solvent may be N-methyl-pyrrolidone (NMP).

As an example, the binder for use in the positive electrode film layer may include one or more of polyvinylidene difluoride (PVDF) or polytetrafluoroethylene (PTFE).

As an example, the conductive agent for use in the positive electrode film layer may include one or more of superconductive carbon, carbon black (such as acetylene black and Ketjen black), carbon dots, carbon nanotubes, graphene, or carbon nanofibers.

In the secondary battery of this application, the positive current collector may be a metal foil or a composite current collector (formed by disposing a metal material on a polymer substrate). As an example, the positive current collector may be an aluminum foil.

**[Electrolyte]**

The type of the electrolyte for the secondary battery is not particularly limited herein, and may be selected as required. For example, the electrolyte may be at least one selected from a solid-state electrolyte or a liquid-state electrolyte (that is, electrolyte solution).

In some embodiments, the electrolyte is an electrolyte solution. The electrolyte solution includes an electrolyte salt and a solvent.

In some embodiments, the electrolyte salt may be one or more of $LiPF_6$ (lithium hexafluorophosphate), $LiBF_4$ (lithium tetrafluoroborate), $LiClO_4$ (lithium perchlorate), $LiAsF_6$ (lithium hexafluoroarsenate), LiFSI (lithium bisfluorosulfonimide)), LiTFSI (lithium bistrifluoromethanesulfonimide), LiTFS (lithium trifluoromethanesulfonate), LiDFOB (lithium difluoro(oxalato) borate), LiBOB (lithium bis(oxalato) borate), $LiPO2F_2$ (lithium difluorophosphate), LiDFOP (lithium difluoro(bisoxalato) phosphate), and LiTFOP (lithium tetrafluoro(oxalato) phosphate).

In some embodiments, the solvent may be one or more selected from ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethylene propyl carbonate (EPC), butylene carbonate (BC), fluoroethylene carbonate (FEC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), methyl sulfonyl methane (MSM), ethyl methyl sulfone (EMS), or (ethylsulfonyl)ethane (ESE).

In some embodiments, the electrolyte solution further optionally includes an additive. For example, the additive may include a negative electrode film-forming additive, a positive electrode film-forming additive, and additives that can improve some performance of the battery, for example, an additive that improves overcharge performance of the battery, an additive that improves high-temperature performance of the battery, and an additive that improves low-temperature performance of the battery, and the like.

**[Separator]**

Secondary batteries that employ an electrolyte solution and some secondary batteries that employ a solid-state electrolyte further contain a separator. The separator is disposed between the positive electrode plate and the negative electrode plate to serve an isolation purpose. The type of the separator is not particularly limited in this application, and may be any well-known porous separator that is highly stable both chemically and mechanically. In some embodiments, the material of the separator may be one or more selected from glass fiber, non-woven fabric, polyethylene, polypropylene, or polyvinylidene difluoride. The separator may be a single-layer film or a multilayer composite film. When the separator is a multilayer composite film, materials of different layers may be identical or different.

In some embodiments, the positive electrode plate, the negative electrode plate, and the separator may be made into an electrode assembly by winding or stacking.

In some embodiments, the secondary battery may include an outer package. The outer package may be configured to package the electrode assembly and the electrolyte.

In some embodiments, the outer package of the secondary battery may be a hard shell such as a hard plastic shell, an aluminum shell, a steel shell, or the like. Alternatively, the outer package of the secondary battery may be a soft package such as a pouch-type soft package. The material of the soft package may be plastic such as one or more of polypropylene (PP), polybutylene terephthalate (PBT), or polybutylene succinate (PBS).

The shape of the secondary battery is not particularly limited in this application, and may be cylindrical, prismatic or any other shape. FIG. 1 shows a prismatic secondary battery 5 as an example.

In some embodiments, referring to FIG. 2, the outer package may include a housing 51 and a cover plate 53. The housing 51 may include a bottom plate and a side plate connected to the bottom plate. The bottom plate and the side plate close in to form an accommodation cavity. The housing 51 is equipped with an opening that communicates with the accommodation cavity. The cover plate 53 is configured to fit and cover the opening to close the accommodation cavity.

The positive electrode plate, the negative electrode plate, and the separator may be made into the electrode assembly 52 by winding or stacking. The electrode assembly 52 is packaged in the accommodation cavity. The electrolyte solution infiltrates in the electrode assembly 52. The number of electrode assemblies 52 in the secondary battery 5 may be one or more, and is adjustable as required.

## Electrical device

This application further provides an electrical device. The electrical device includes the secondary battery according to this application. The secondary battery may be used as a power supply of the electrical device, or used as an energy storage unit of the electrical device. The electrical device may be, but without being limited to, a mobile device (such as a mobile phone or a laptop computer), an electric vehicle (such as a battery electric vehicle, a hybrid electric vehicle, a plug-in hybrid electric vehicle, an electric bicycle, an electric scooter, an electric golf cart, or an electric truck), an electric train, a ship, a satellite system, or an energy storage system.

FIG. 3 shows an electrical device as an example. The electrical device may be a battery electric vehicle, a hybrid electric vehicle, a plug-in hybrid electric vehicle, or the like. A battery pack or a battery module containing the secondary battery according to this application may be employed to meet the requirements of the device for a high power and a high energy density.

In another example, the electrical device may be a mobile phone, a tablet computer, a notebook computer, or the like. The electrical device is generally required to be thin and light, and may employ a secondary battery as a power supply.

## Embodiments

The following embodiments are more detailed descriptions of the subject-matter disclosed herein. The embodiments are merely intended as illustrative descriptions because, evidently, a person skilled in the art may make various modifications and changes to such embodiments without departing from what is disclosed herein. Unless otherwise specified, all fractions, percentages, and ratios mentioned in the following embodiments are values by weight. All reagents used in the embodiments are commercially available or can be synthesized according to conventional methods, and can be directly put into use without a need of further processing. All the instruments used in the embodiments are commercially available.

## Embodiments 1 to 29

### Preparing plasticizers

1) Preparing a plasticizer A

Adding 1 mol of ethylene glycol into a reactor, replacing the air in the reactor with nitrogen, and adding 0.05 mol of trimethylamine. Heating up to $T_1$ = 100 °C, adding 8 mol of ethylene oxide so that the ethylene glycol reacts with the ethylene oxide under the catalysis of the trimethylamine; continuing the reaction for 3 hours, and then cooling down to $T_2$ = 90 °C, and pumping water into the system, where the mass percent of the water is approximately 1% of the total mass of the reactants, and then vacuumizing to remove the water in the system, and cooling down to 60 °C to 80 °C to obtain uncapped PEG (plasticizer A) with an average degree of polymerization being n = 8.

2) Preparing a plasticizer B

Preparing the plasticizer B in a process similar to the process of preparing the plasticizer A except that $T_1$ is adjusted to 105 °C, the dosage of the ethylene oxide is adjusted to 25 mol, and $T_2$ is adjusted to 95 °C, so as to obtain uncapped PEG (plasticizer B) with an average degree of polymerization being n = 25.

3) Preparing a plasticizer C

Preparing the plasticizer C in a process similar to the process of preparing the plasticizer A except that the dosage of the trimethylamine is adjusted to 0.2 mol, $T_1$ is adjusted to 110 °C, the dosage of the ethylene oxide is adjusted to 50 mol, and $T_2$ is adjusted to 100 °C, so as to obtain uncapped PEG (plasticizer C) with an average degree of polymerization being n = 50.

4) Preparing a plasticizer D

Preparing the plasticizer D in a process similar to the process of preparing the plasticizer A except that the dosage of the trimethylamine is adjusted to 0.4 mol, $T_1$ is adjusted to 115 °C, the dosage of the ethylene oxide is adjusted to 100 mol, and $T_2$ is adjusted to 105 °C, so as to obtain uncapped PEG (plasticizer D) with an average degree of polymerization being n = 100.

5) Preparing a plasticizer E

Preparing the plasticizer E in a process similar to the process of preparing the plasticizer A except that the dosage of the trimethylamine is adjusted to 0.6 mol, $T_1$ is adjusted to 120 °C, the dosage of the ethylene oxide is adjusted to 120 mol, and $T_2$ is adjusted to 110 °C, so as to obtain uncapped PEG (plasticizer E) with an average degree of polymerization being n = 120.

6) Preparing a plasticizer F

Mixing 1 mol of plasticizer C with 3 mol of 98 wt% concentrated sulfuric acid homogeneously, adding 1.15 mol of end-capping agent a, and reacting the mixture at 120 °C for 2 hours to obtain a plasticizer F.

7) Preparing a plasticizer G

Mixing 1 mol of plasticizer D with 3 mol of 98 wt% concentrated sulfuric acid homogeneously, adding 1.15 mol of end-capping agent a, and reacting the mixture at 120 °C for 2 hours to obtain a plasticizer G.

8) Preparing a plasticizer H

Mixing 1 mol of plasticizer C with 3 mol of 98 wt% concentrated sulfuric acid homogeneously, adding 1.3 mol of end-capping agent b, and reacting the mixture at 120 °C for 2 hours to obtain a plasticizer H.

9) Preparing a plasticizer I

Mixing 1 mol of plasticizer D with 3 mol of 98 wt% concentrated sulfuric acid homogeneously, adding 1.3 mol of end-capping agent b, and reacting the mixture at 120 °C for 2 hours to obtain a plasticizer I.

10) Preparing a plasticizer J

Reacting 1 mol of glycerol and 12 mol of propylene oxide under the catalysis of 0.4 mol of potassium hydroxide at a temperature $T_3$ = 90 °C and at a pressure of 0.4 MPa to 0.5 MPa; cooling down to $T_4$ = 60 °C, adding water while stirring, so as to dissolve excess potassium hydroxide; adding an appropriate amount of phosphoric acid to adjust the pH value of the solution to 6 to 7; slowly heating up to 110 °C to 120 °C, vacuum-dehydrating and filtering the mixture to obtain uncapped PPG (plasticizer J) with an average degree of polymerization being n = 12.

11) Preparing a plasticizer K

Preparing the plasticizer K in a process similar to the process of preparing the plasticizer J except that $T_3$ is adjusted to 95 °C, the dosage of the propylene oxide is adjusted to 25 mol, and the dosage of the potassium hydroxide is adjusted to 0.8 mol, so as to obtain uncapped PPG (plasticizer K) with an average degree of polymerization being n = 25.

12) Preparing a plasticizer L

Preparing the plasticizer L in a process similar to the process of preparing the plasticizer J except that $T_3$ is adjusted to 100 °C, the dosage of the propylene oxide is adjusted to 30 mol, the dosage of the potassium hydroxide is adjusted to 1 mol, and $T_4$ is adjusted to 65 °C, so as to obtain uncapped PPG (plasticizer L) with an average degree of polymerization being n = 30.

13) Preparing a plasticizer M

Preparing the plasticizer M in a process similar to the process of preparing the plasticizer J except that $T_3$ is

adjusted to 105 °C, the dosage of the propylene oxide is adjusted to 50 mol, the dosage of the potassium hydroxide is adjusted to 1.5 mol, and $T_4$ is adjusted to 70 °C, so as to obtain uncapped PPG (plasticizer M) with an average degree of polymerization being n = 50.

14) Preparing a plasticizer N

Mixing 1 mol of plasticizer L with 3 mol of 98 wt% concentrated sulfuric acid homogeneously, adding 1.3 mol of end-capping agent a, and reacting the mixture at 130 °C for 2.5 hours to obtain a plasticizer N.

15) Preparing a plasticizer O

Mixing 1 mol of plasticizer M with 3 mol of 98 wt% concentrated sulfuric acid homogeneously, adding 1.3 mol of end-capping agent a, and reacting the mixture at 130 °C for 2.5 hours to obtain a plasticizer O.

16) Preparing a plasticizer P

Mixing 1 mol of plasticizer L with 3 mol of 98 wt% concentrated sulfuric acid homogeneously, adding 1.5 mol of end-capping agent b, and reacting the mixture at 130 °C for 2.5 hours to obtain a plasticizer P.

17) Preparing a plasticizer Q

Mixing 1 mol of plasticizer M with 3 mol of 98 wt% concentrated sulfuric acid homogeneously, adding 1.5 mol of end-capping agent b, and reacting the mixture at 130 °C for 2.5 hours to obtain a plasticizer Q.

The structures of the end-capping agent a and the end-capping agent b are:

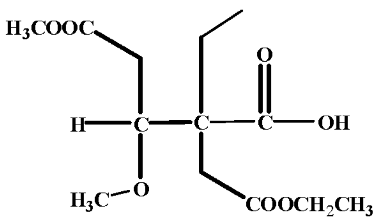

end-capping agent a;

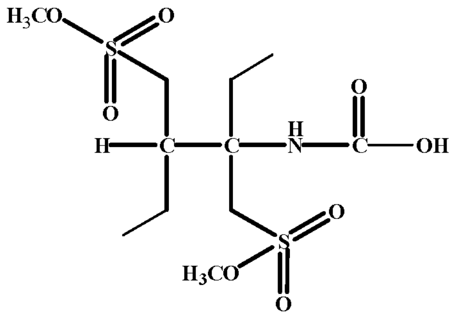

end-capping agent b

**Preparing a negative electrode slurry**

Adding a plasticizer into deionized water, adjusting the content of the plasticizer, and stirring well to obtain a first dispersion. Mixing the first dispersion, graphite as a negative active material, conductive carbon, a thickener CMC-Na, and a binder SBR homogeneously to obtain a negative electrode slurry.

Based on the total mass of the solid constituents in the negative electrode slurry, the mass percent of the plasticizer is $w_1$, the mass percent of the negative active material is $w_2$, the mass percent of the conductive carbon is 0.8%, the mass percent of the thickener CMC-Na is 1.1%, and the mass percent of the binder SBR is 1.5%.

The type of the plasticizers, the degree of polymerization n of the plasticizers, the mass percentages $w_1$ and $w_2$, and other preparation parameters of the plasticizers used in each embodiment are shown in Table 1.

**Comparative Embodiment 1**

**Preparing a negative electrode slurry**

Adding graphite as a negative active material, conductive carbon, a thickener CMC-Na, and a binder SBR at a mass ratio of 96.6: 0.8: 1.1: 1.5 into deionized water, and mixing well to obtain a negative electrode slurry.

**Comparative Embodiment 2**

Preparing the negative electrode slurry of Comparative Embodiment 2 based on the preparation process of the negative electrode slurry in Embodiments 1 to 29 by using ethylene glycol monomethyl ether as a plasticizer and by adjusting $w_1$, $w_2$, and other preparation parameters according to Table 1.

Performing the following steps to test the liquid surface tension of the first dispersions in Embodiments 1 to 29 and Comparative Embodiment 2, and the deionized water in Comparative Embodiment 1 to obtain test results shown in Table 1.

**Testing the liquid surface tension**

Testing the liquid surface tension with an interfacial tensiometer (model: DCAT 15) according to the following test process:

Touching the liquid surface by using a 24 mm × 10 mm × 0.1 mm platinum sheet with a sandblasted and roughened surface. When the instrument senses immersion of the platinum sheet into the liquid under test, the surroundings of the platinum plate are subj ected to a surface tension, and the surface tension of the liquid pulls the platinum sheet down as far as practicable. When the surface tension of the liquid and other related forces and balance forces reach an equilibrium, the sensing platinum sheet will stop being further immersed into the liquid. Measuring the immersion depth at this time by using a balance sensor, and calculating the surface tension value of the liquid.

**Table 1**

| Serial number | Plasticizer | n | $w_1$ | $w_2$ | Surface tension (mN/m) |
|---|---|---|---|---|---|
| Embodiment 1 | Plasticizer A | 8 | 0.30% | 96.30% | 45.30 |
| Embodiment 2 | Plasticizer B | 25 | 0.30% | 96.30% | 44.20 |
| Embodiment 3 | Plasticizer C | 50 | 0.30% | 96.30% | 43.50 |
| Embodiment 4 | Plasticizer D | 100 | 0.30% | 96.30% | 42.18 |
| Embodiment 5 | Plasticizer E | 120 | 0.30% | 96.30% | 43.10 |
| Embodiment 6 | Plasticizer D | 100 | 0.05% | 96.55% | 44.28 |
| Embodiment 7 | Plasticizer D | 100 | 0.10% | 96.50% | 43.12 |
| Embodiment 8 | Plasticizer D | 100 | 0.20% | 96.40% | 42.56 |
| Embodiment 9 | Plasticizer D | 100 | 0.40% | 96.20% | 42.10 |
| Embodiment 10 | Plasticizer D | 100 | 0.50% | 96.10% | 41.98 |
| Embodiment 11 | Plasticizer D | 100 | 0.60% | 96.00% | 41.23 |
| Embodiment 12 | Plasticizer F | 50 | 0.30% | 96.30% | 42.73 |
| Embodiment 13 | Plasticizer G | 100 | 0.30% | 96.30% | 40.20 |
| Embodiment 14 | Plasticizer H | 50 | 0.30% | 96.30% | 41.63 |
| Embodiment 15 | Plasticizer I | 100 | 0.30% | 96.30% | 39.43 |
| Embodiment 16 | Plasticizer J | 12 | 0.30% | 96.30% | 45.67 |
| Embodiment 17 | Plasticizer K | 25 | 0.30% | 96.30% | 44.23 |
| Embodiment 18 | Plasticizer L | 30 | 0.30% | 96.30% | 43.15 |
| Embodiment 19 | Plasticizer M | 50 | 0.30% | 96.30% | 42.06 |

(continued)

| Serial number | Plasticizer | n | $w_1$ | $w_2$ | Surface tension (mN/m) |
|---|---|---|---|---|---|
| Embodiment 20 | Plasticizer M | 50 | 0.05% | 96.55% | 44.23 |
| Embodiment 21 | Plasticizer M | 50 | 0.10% | 96.50% | 43.17 |
| Embodiment 22 | Plasticizer M | 50 | 0.20% | 96.40% | 42.89 |
| Embodiment 23 | Plasticizer M | 50 | 0.40% | 96.20% | 41.45 |
| Embodiment 24 | Plasticizer M | 50 | 0.50% | 96.10% | 41.22 |
| Embodiment 25 | Plasticizer M | 50 | 0.60% | 96.00% | 40.98 |
| Embodiment 26 | Plasticizer N | 30 | 0.30% | 96.30% | 42.59 |
| Embodiment 27 | Plasticizer O | 50 | 0.30% | 96.30% | 41.88 |
| Embodiment 28 | Plasticizer P | 30 | 0.30% | 96.30% | 42.58 |
| Embodiment 29 | Plasticizer Q | 50 | 0.30% | 96.30% | 41.54 |
| Comparative Embodiment 1 | / | / | / | 96.60% | 72.23 |
| Comparative Embodiment 2 | Ethylene glycol monomethyl ether | / | 0.30% | 96.30% | 68.20 |

A negative electrode plate is prepared by using the negative electrode slurries of Embodiments 1 to 29 and Comparative Embodiments 1 to 2 according to the following process.

**Preparing a negative electrode plate**

Coating a copper foil evenly with the negative electrode slurry at a speed of 50 m/min and 70 m/min respectively at a coating concentration of 180 mg/1540.25 $mm^2$ to 220 mg/1540.25 $mm^2$ on a single side. Performing oven-drying and cold-pressing, and observing the film cracking status of the negative electrode plate. Slitting the foil to obtain a negative electrode plate with a compaction density controlled to be 1.65 g/cm3.

Applying the negative electrode slurry of Comparative Embodiment 1 at different coating speeds to obtain negative electrode plates of Comparative Embodiments 1-1 to 1-3.

Testing the electrolyte infiltration speeds of the negative electrode plates of Embodiments 1 to 29, Comparative Embodiments 1-1 to 1-3, and Comparative Embodiment 2 by the following methods.

**Testing the electrolyte infiltration speed**

Drawing up a specified amount of electrolyte solution by using a capillary tube, letting the electrolyte solution contact and infiltrate the surface of the negative electrode plate, and recording the infiltration time, where the infiltration time represents the time consumed from the start of contact between the capillary tube and the negative electrode plate to complete absorption of the electrolyte solution. Calculating the electrolyte infiltration speed of the negative electrode plate based on the mass of the absorbed electrolyte solution and the infiltration time.

The preparation parameters of the negative electrode plate, the film cracking status, and the electrolyte infiltration speed in each embodiment and comparative embodiment are shown in Table 2.

Further, secondary batteries are prepared from the negative electrode plates of Embodiments 1 to 29, Comparative Embodiments 1-1 to 1-3, and Comparative Embodiment 2 by the following method separately, and are subjected to a performance test. The test results are shown in Table 3 below.

**Preparing a secondary battery**

**Preparing a negative electrode plate**

Using the negative electrode plates of Embodiments 1 to 29, Comparative Embodiments 1-1 to 1-3, and Comparative Embodiment 2 as the negative electrode plate of the secondary battery directly.

**Preparing a positive electrode plate**

Mixing well $LiNi_{0.8}Co_{0.1}Mn_{0.1}O_2$ (NCM811) as a positive active material, Super P as a conductive agent, polyvinylidene difluoride (PVDF) as a binder, and a dispersant at a mass ratio of 96.94: 1.7: 0.3: 1: 0.06 in an appropriate amount of N-methyl-pyrrolidone (NMP) solvent to form a uniform positive electrode slurry. Coating a surface of a positive current collector aluminum foil with the positive electrode slurry, and drying and cold-pressing the foil to obtain a positive electrode plate. The compaction density of the positive electrode film layer is 3.45 $g/cm^3$, and a ratio of the negative electrode capacity per unit area to the positive electrode capacity per unit area (N/P ratio value) is controlled to be 1.07.

**Preparing an electrolyte solution**

Mixing propylene carbonate (PC), ethylene carbonate (EC), and diethyl carbonate (DEC) at a mass ratio of 1: 1: 1 in a dry argon atmosphere glovebox (in which the content of $H_2O$ is less than 0.1 ppm, and the content of $O_2$ is less than 0.1 ppm) to form an organic solvent. Dissolving a well-dried lithium salt $LiPF_6$ in the organic solvent. Stirring well to obtain an electrolyte solution in which the concentration of the lithium salt is 1.15 mol/L.

**Preparing a separator**

Using a polypropylene film as a separator.

**Preparing a secondary battery**

Stacking the positive electrode plate, the separator, and the negative electrode plate sequentially, and winding the stacked structure to obtain an electrode assembly. Placing the electrode assembly into an outer package, injecting the electrolyte solution, and performing steps such as sealing, standing, chemical formation, and aging to obtain a secondary battery.

**Test Part**

1) Testing the cycle capacity retention rate of the battery cycled under 25 °C

Charging a secondary battery at a constant current of 1/3 C under a 25 °C temperature until the voltage reaches 4.2 V, and then charging the battery at a constant voltage of 4.2 V until the current reaches 0.05 C. Leaving the battery to stand for 5 minutes, and then discharging the battery at a current of 1/3 C until the voltage reaches 2.8 V Recording the capacity at this time as an initial capacity $C_0$. Repeating the foregoing steps for the same battery, and recording the discharge capacity $C_n$ of the battery at the end of the $n^{th}$ cycle. Calculating the capacity retention rate of the battery at the end of each cycle as: $P_n = C_n/C_0 \times 100\%$.

FIG. 4 shows the test results of the cycle capacity retention rate of the battery cycled under 25 °C according to Embodiment 1 versus Comparative Embodiment 1.

2) Testing the discharge direct current resistance (DCR) of a 50% SOC battery

Charging a secondary battery at a constant current rate of 1/3 C under 25 °C until a voltage of 4.2 V, and then charging the battery at a constant voltage of 4.2 V until the current reaches 0.05 C. Leaving the battery to stand for 5 minutes. Subsequently, discharging the battery at a rate of 1/3 C for 90 minutes, adjusting the state of charge of the electrode assembly to 50% SOC, leaving the battery to stand for 60 minutes, and then discharging the battery at a current of 3 C for 30 seconds, and obtaining the discharge DCR of the 50% SOC battery based on the test data.

3) Testing the 5 C capacity retention rate

Charging a secondary battery at a constant current rate of 0.5 C under 25 °C until the voltage reaches 4.2 V, and then charging the battery at a constant voltage of 4.2 V until the current reaches 0.05 C. Leaving the battery to stand for 5 minutes, and then discharging the battery at a rate of 0.5 C until the voltage reaches 2.8 V, and recording the capacity as $C_0$. Charging the battery at a constant current rate of 5 C until the voltage reaches 4.2 V, and then charging the battery at a constant voltage of 4.2 V until the current reaches 0.05 C. Leaving the battery to stand for 5 minutes, and then discharging the battery at a 5 C rate until the voltage reaches 2.8 V, and recording the capacity at this time as $C_1$. Calculating the 5 C capacity retention rate as $\eta = C_1/C_0 \times 100\%$.

4) Testing the first-cycle Coulombic efficiency

Discharging a chemically formed secondary battery at constant current rate (DC) of 1/3 C under 25 °C until the voltage reaches 2.8 V Leaving the battery to stand for 10 minutes, and then charging the battery at a constant current (CC) rate of 1/3 C until the voltage reaches 4.2 V Subsequently, charging the battery at a constant voltage (CV) of 4.2 V until the current reaches 0.05 C, and leaving the battery to stand for 10 minutes, and recording the charge capacity at this time. Subsequently, discharging the battery at constant current (DC) rate of 1/3 C until the voltage reaches 2.8 V, and recording the discharge capacity at this time.

First-cycle coulombic efficiency = discharge capacity/charge capacity × 100%.

5) Testing the lithium plating status on an interface of a fully charged battery

Performing chemical formation on a secondary battery (the chemical formation process may be: leaving the battery to stand for 20 minutes, charging the battery at a constant current of 0.02 C until the voltage reaches 3.0 V, leaving the battery to stand for 5 minutes, and charging the battery at a constant current of 0.05 C until the voltage reaches 3.4 V Leaving the battery to stand for 5 minutes, and then charging the battery at a constant current of 0.2 C until the voltage reaches 3.75 V), and leaving the battery to stand for 30 minutes, and then charging the secondary batter to a full capacity (the process of fully charging the battery may be: charging the battery at a constant current rate of 0.33 C until the voltage reaches 4.2 V, and then charging the battery at a constant voltage until the current reaches 0.05 C). Disassembling the secondary battery in a dry room (with a humidity less than 0.2%). If the surface of the negative electrode is golden yellow, it indicates that no lithium plating occurs. If the surface of the negative electrode is silvery white in partial regions, it indicates that lithium plating has occurred.

**Table 2**

| Serial number | Coating concentration (mg/1540 $mm^2$) | Film cracking status | | Electrolyte infiltration speed (μg/s) |
|---|---|---|---|---|
| | | at a coating speed of 50 m/min | at a coating speed of 70 m/min | |
| Embodiment 1 | 220 | No crack | No crack | 8.24 |
| Embodiment 2 | 220 | No crack | No crack | 8.45 |
| Embodiment 3 | 220 | No crack | No crack | 8.70 |
| Embodiment 4 | 220 | No crack | No crack | 9.20 |
| Embodiment 5 | 220 | Slight cracking | Slight cracking | 9.13 |
| Embodiment 6 | 220 | No crack | Slight cracking | 7.83 |
| Embodiment 7 | 220 | No crack | No crack | 8.04 |
| Embodiment 8 | 220 | No crack | No crack | 8.46 |
| Embodiment 9 | 220 | No crack | No crack | 8.65 |
| Embodiment 10 | 220 | No crack | No crack | 8.76 |
| Embodiment 11 | 220 | No crack | No crack | 8.83 |
| Embodiment 12 | 220 | No crack | No crack | 8.66 |
| Embodiment 13 | 220 | No crack | No crack | 9.27 |
| Embodiment 14 | 220 | No crack | No crack | 8.75 |
| Embodiment 15 | 220 | No crack | No crack | 9.34 |
| Embodiment 16 | 220 | No crack | No crack | 8.57 |
| Embodiment 17 | 220 | No crack | No crack | 8.82 |
| Embodiment 18 | 220 | No crack | No crack | 9.32 |
| Embodiment 19 | 220 | Slight cracking | Slight cracking | 9.25 |
| Embodiment 20 | 220 | No crack | Slight cracking | 7.95 |
| Embodiment 21 | 220 | No crack | No crack | 8.16 |

(continued)

| Serial number | Coating concentration (mg/1540 $mm^2$) | Film cracking status | | Electrolyte infiltration speed (μg/s) |
|---|---|---|---|---|
| | | at a coating speed of 50 m/min | at a coating speed of 70 m/min | |
| Embodiment 22 | 220 | No crack | No crack | 8.58 |
| Embodiment 23 | 220 | No crack | No crack | 8.77 |
| Embodiment 24 | 220 | No crack | No crack | 8.88 |
| Embodiment 25 | 220 | No crack | No crack | 8.95 |
| Embodiment 26 | 220 | No crack | No crack | 8.78 |
| Embodiment 27 | 220 | No crack | No crack | 9.39 |
| Embodiment 28 | 220 | No crack | No crack | 8.87 |
| Embodiment 29 | 220 | No crack | No crack | 9.46 |
| Comparative Embodiment 1-1 | 180 | Slight cracking | Slight cracking | 8.40 |
| Comparative Embodiment 1-2 | 200 | Severe cracking | Severe cracking | 7.60 |
| Comparative Embodiment 1-3 | 220 | Severe cracking | Severe cracking | 7.20 |
| Comparative Embodiment 2 | 220 | Severe cracking | Severe cracking | 7.50 |

**Table 3**

| Serial number | Discharge DCR of 50%SOC battery | 5C capacity retention rate | First-cycle coulombic efficiency | Lithium plating status on an interface of a fully charged battery |
|---|---|---|---|---|
| Embodiment 1 | 42.30 mΩ | 51.00% | 87.78% | No lithium plating |
| Embodiment 2 | 41.40 mΩ | 51.80% | 88.20% | No lithium plating |
| Embodiment 3 | 40.90 mΩ | 52.07% | 88.64% | No lithium plating |
| Embodiment 4 | 40.36 mΩ | 52.20% | 88.89% | No lithium plating |
| Embodiment 5 | 40.78 mΩ | 52.00% | 88.70% | No lithium plating |
| Embodiment 6 | 41.96 mΩ | 51.10% | 87.65% | No lithium plating |
| Embodiment 7 | 41.50 mΩ | 51.76% | 87.90% | No lithium plating |
| Embodiment 8 | 41.02 mΩ | 52.00% | 88.00% | No lithium plating |
| Embodiment 9 | 40.80 mΩ | 51.83% | 88.12% | No lithium plating |
| Embodiment 10 | 42.40 mΩ | 51.51% | 87.60% | No lithium plating |
| Embodiment 11 | 43.00 mΩ | 50.45% | 87.20% | Slight lithium plating |
| Embodiment 12 | 40.20 mΩ | 52.20% | 88.76% | No lithium plating |
| Embodiment 13 | 39.70 mΩ | 53.00% | 89.10% | No lithium plating |
| Embodiment 14 | 40.00 mΩ | 52.71% | 88.90% | No lithium plating |
| Embodiment 15 | 39.30 mΩ | 53.52% | 89.30% | No lithium plating |
| Embodiment 16 | 41.20 mΩ | 51.94% | 88.43% | No lithium plating |
| Embodiment 17 | 40.70 mΩ | 52.21% | 88.87% | No lithium plating |
| Embodiment 18 | 40.16 mΩ | 52.34% | 89.12% | No lithium plating |
| Embodiment 19 | 40.58 mΩ | 52.14% | 88.93% | No lithium plating |
| Embodiment 20 | 41.76 mΩ | 51.24% | 87.88% | No lithium plating |

(continued)

| Serial number | Discharge DCR of 50%SOC battery | 5C capacity retention rate | First-cycle coulombic efficiency | Lithium plating status on an interface of a fully charged battery |
|---|---|---|---|---|
| Embodiment 21 | 41.30 mΩ | 51.90% | 88.13% | No lithium plating |
| Embodiment 22 | 40.82 mΩ | 52.14% | 88.23% | No lithium plating |
| Embodiment 23 | 40.60 mΩ | 51.97% | 88.35% | No lithium plating |
| Embodiment 24 | 42.20 mΩ | 51.65% | 87.83% | No lithium plating |
| Embodiment 25 | 42.80 mΩ | 50.59% | 87.43% | Slight lithium plating |
| Embodiment 26 | 40.00 mΩ | 52.34% | 88.99% | No lithium plating |
| Embodiment 27 | 39.50 mΩ | 53.14% | 89.33% | No lithium plating |
| Embodiment 28 | 39.80 mΩ | 52.85% | 89.13% | No lithium plating |
| Embodiment 29 | 39.10 mΩ | 53.66% | 89.53% | No lithium plating |
| Comparative Embodiment 1-1 | 42.30 mΩ | 50.12% | 87.46% | No lithium plating |
| Comparative Embodiment 1-2 | 43.28 mΩ | 49.40% | 87.30% | No lithium plating |
| Comparative Embodiment 1-3 | 44.15 mΩ | 48.63% | 87.00% | No lithium plating |
| Comparative Embodiment 2 | 44.00 mΩ | 48.24% | 87.20% | No lithium plating |

As can be seen from Table 1, the plasticizer of this application can effectively reduce the surface tension of deionized water. Therefore, in the negative electrode plates prepared from the negative electrode slurries of Embodiments 1 to 29, when the slurry is applied at a coating speed of 50 m/min and 70 m/min separately, the degree of film cracking is much lower than the degree of film cracking of the negative electrode plate in each comparative embodiment. In addition, as can be seen from the test results shown in Table 3, the negative electrode composition of this application includes a plasticizer. When applied to a secondary battery, the plasticizer can reduce the internal resistance of the secondary battery, thereby improving the C-rate performance, first-cycle Coulombic efficiency, and interface performance of the secondary battery. In this way, the prepared secondary battery is superior in cycle performance, C-rate performance, and safety performance.

In contrast, in Comparative Embodiment 1, no plasticizer is added. Even at a coating concentration of 180 mg/1540 $mm^2$, the negative electrode film layer is still cracked. When the coating concentration increases to 220 mg/1540 $mm^2$, the negative electrode film layer of Comparative Embodiment 1 is even cracked severely. Although a micromolecular ether plasticizer is added in Comparative Embodiment 2, the content of ether bonds in the molecules of the micromolecular ether plasticizer is relatively low, and produces an insignificant effect in reducing the surface tension of the solvent. Therefore, the negative electrode film layer of Comparative Embodiment 2 is still cracked severely at a coating concentration of 220 mg/1540 $mm^2$.

Described above are merely some specific embodiments of this application, but the protection scope of this application is not limited to such embodiments. Various equivalent modifications and replacements easily conceivable by any person skilled in the art without departing from the technical scope disclosed herein still fall within the protection scope of this application. Therefore, the protection scope of this application is subject to the protection scope of the claims.

## Claims

1. A negative electrode composition, comprising a negative active material and a plasticizer, wherein the plasticizer comprises a polyether polyol, and optionally, a molecular chain of the polyether polyol contains a polymerized segment that comprises a repeating structural unit $-[O-CH_2-CH_2]-$, or $-[O-CH(CH_3)-CH_2]-$, or a combination of these units.

2. The negative electrode composition according to claim 1, wherein an average degree of polymerization of the polyether polyol is 8 to 120, and optionally, the average degree of polymerization is 12 to 50.

3. The negative electrode composition according to claim 1 or 2, wherein the plasticizer comprises polyethylene glycol,

polypropylene glycol, or a copolymer thereof.

**4.** The negative electrode composition according to any one of claims 1 to 3, wherein the polyether polyol comprises an end group that assumes a structure represented by Formula 1:

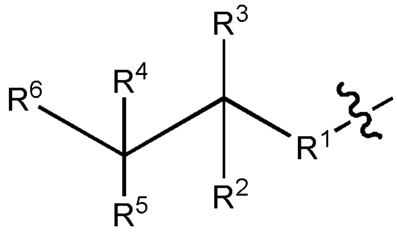

Formula 1

$R^1$ represents

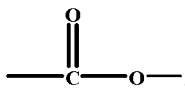, 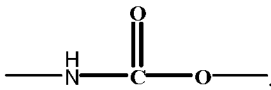,

or $-CH_2-O-$;

$R^2$, $R^3$, $R^4$, $R^5$, and $R^6$ each independently represent hydrogen, halogen, or the following groups substituted or unsubstituted by $R^a$:

$C_1$ to $C_8$ alkyl, $C_1$ to $C_8$ alkoxyl, $C_1$ to $C_8$ alkylthio, $C_2$ to $C_8$ alkenyl, $C_2$ to $C_8$ alkynyl, $C_3$ to $C_8$ alicyclyl, $C_2$ to $C_8$ heterocyclyl, $C_6$ to $C_{10}$ aryl, $C_3$ to $C_{10}$ heteroaryl, aldehyde, amido, $C_1$ to $C_8$ sulfonate ester group, $C_1$ to $C_8$ sulfinate ester group, $C_1$ to $C_8$ ester group, or $C_1$ to $C_8$ phosphate ester group;

$R^a$ represents at least one of $C_1$ to $C_8$ alkyl, $C_1$ to $C_8$ alkoxyl, $C_1$ to $C_8$ alkylthio, $C_2$ to $C_8$ alkenyl, $C_2$ to $C_8$ alkynyl, $C_3$ to $C_8$ alicyclyl, $C_2$ to $C_8$ heterocyclyl, $C_6$ to $C_{10}$ aryl, or $C_3$ to $C_{10}$ heteroaryl; and

optionally, at least one of $R^2$, $R^3$, $R^4$, $R^5$, or $R^6$ represents a $C_1$ to $C_8$ ester group, a $C_1$ to $C_8$ sulfonate ester group, a $C_1$ to $C_8$ sulfinate ester group, an $R^a$-substituted $C_1$ to $C_8$ ester group, an $R^a$-substituted $C_1$ to $C_8$ sulfonate ester group, or an $R^a$-substituted $C_1$ to $C_8$ sulfinate ester group.

**5.** The negative electrode composition according to claim 4, wherein $R^1$ represents

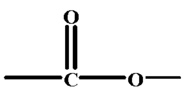 or 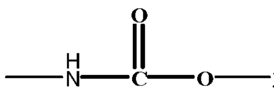;

$R^2$ and $R^4$ each independently represent a $C_1$ to $C_8$ ester group, a $C_1$ to $C_8$ sulfonate ester group, a $C_1$ to $C_8$ sulfinate ester group, an $R^b$-substituted $C_1$ to $C_8$ ester group, an $R^b$-substituted $C_1$ to $C_8$ sulfonate ester group, or an $R^b$-substituted $C_1$ to $C_8$ sulfinate ester group; and

$R^3$, $R^5$, and $R^6$ each independently represent hydrogen, halogen, or the following groups substituted or unsubstituted by $R^b$:

$C_1$ to $C_8$ alkyl, $C_1$ to $C_8$ alkoxyl, $C_1$ to $C_8$ alkylthio, $C_2$ to $C_8$ alkenyl, $C_2$ to $C_8$ alkynyl, $C_1$ to $C_8$ sulfonate ester group, $C_1$ to $C_8$ sulfinate ester group, or $C_1$ to $C_8$ ester group, wherein

$R^b$ represents at least one of $C_1$ to $C_8$ alkyl, $C_1$ to $C_8$ alkoxyl, $C_1$ to $C_8$ alkylthio, $C_2$ to $C_8$ alkenyl, or $C_2$ to $C_8$ alkynyl.

**6.** The negative electrode composition according to claim 4, wherein the structure represented by Formula 1 is one selected from the following Formula 1-A or Formula 1-B:

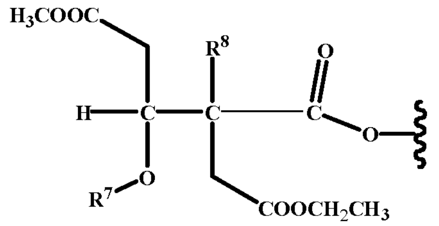

Formula 1-A;

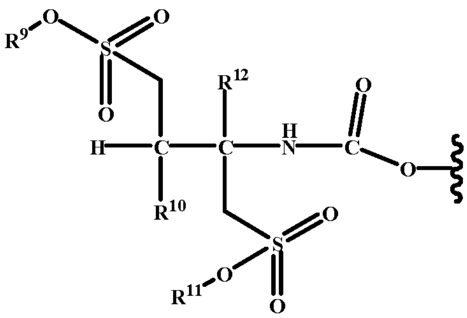

Formula 1-B

in the formulas above, $R^7$, $R^8$, $R^9$, $R^{10}$, $R^{11}$, and $R^{12}$ each are independently selected from a $C_1$ to $C_5$ alkyl.

**7.** The negative electrode composition according to any one of claims 1 to 6, wherein the polyether polyol is selected from compounds represented by Formula 2-A to Formula 2-J:

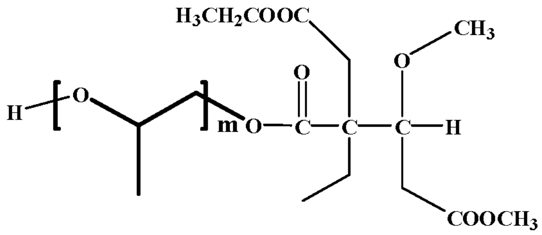

Formula 2-A;

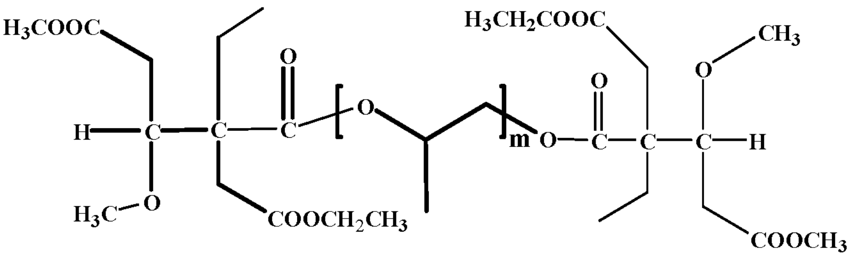

Formula 2-B;

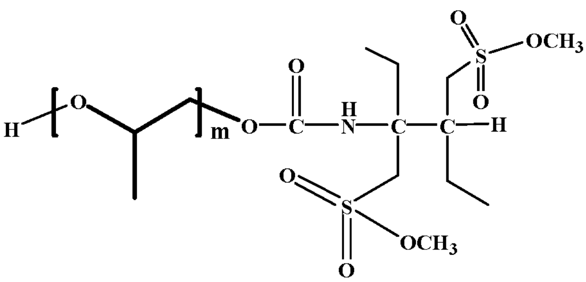

Formula 2-C;

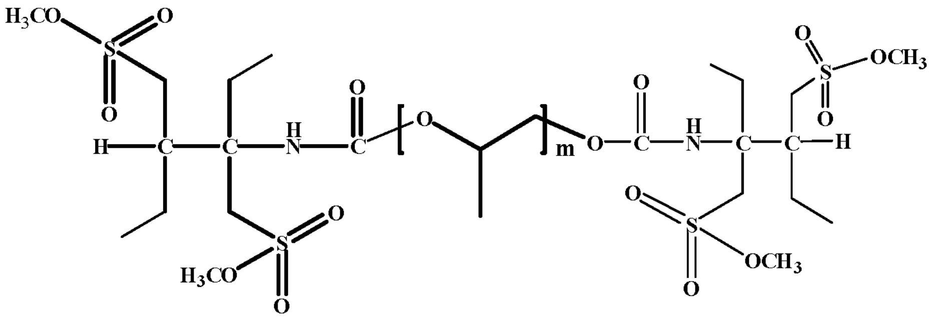

Formula 2-D;

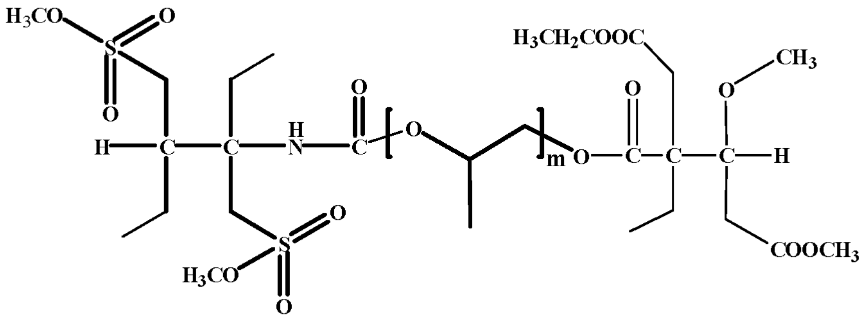

Formula 2-E;

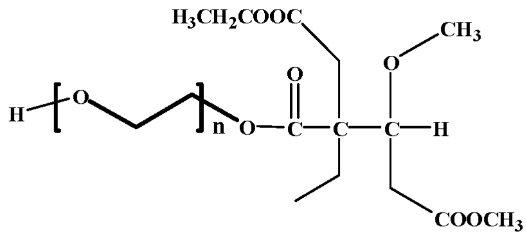

Formula 2-F;

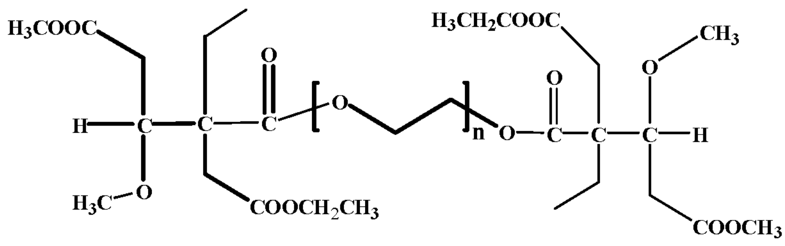

Formula 2-G;

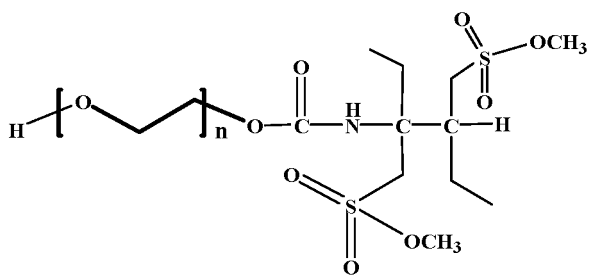

Formula 2-H;

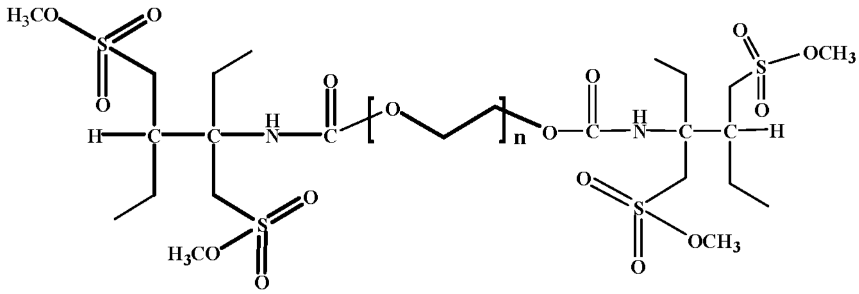

Formula 2-I;

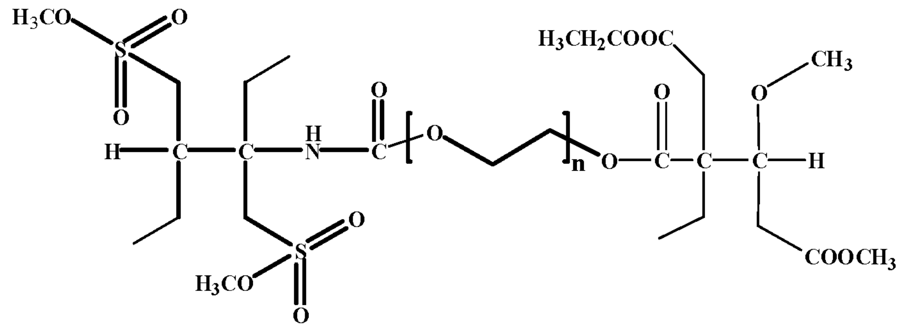

Formula 2-J,

in the formulas above, m independently represents an integer ranging from 12 to 50, and n independently represents an integer ranging from 8 to 120.

**8.** The negative electrode composition according to any one of claims 1 to 7, wherein, based on a total mass of the negative electrode composition, a mass percent of the plasticizer is 0.05% to 0.5%, optionally 0.1% to 0.4%, and further optionally 0.2% to 0.4%.

**9.** The negative electrode composition according to any one of claims 1 to 8, wherein the negative electrode composition further comprises at least one of a conductive agent, a binder, or a thickener.

**10.** A negative electrode slurry, comprising a solvent and the negative electrode composition according to any one of claims 1 to 9.

**11.** The negative electrode slurry according to claim 10, wherein the negative electrode slurry satisfies at least one of the following conditions:

(1) the solvent is water;
(2) a solid content of the negative electrode slurry is 45% to 58%;
(3) a viscosity of the negative electrode slurry is 4000 mPa s to 15000 mPa s;
(4) a solid coating concentration of the negative electrode slurry is greater than or equal to 180 mg/1540.25 $mm^2$; or
(5) a coating speed of the negative electrode slurry is greater than or equal to 50 m/min, and optionally greater than or equal to 60 m/min.

**12.** A negative electrode plate, comprising a negative current collector and a negative electrode film layer located on at least one surface of the negative current collector, wherein the negative electrode film layer comprises the negative electrode composition according to any one of claims 1 to 9, or the negative electrode film layer is a layer formed by drying the negative electrode slurry according to claim 10 or 11.

**13.** The negative electrode plate according to claim 12, wherein the negative electrode plate satisfies at least one of the following conditions:

(6) a thickness of the negative electrode film layer on a single side of the negative current collector is 80 μm to 120 μm;
(7) a compaction density of the negative electrode film layer is 1.3 $g/cm^3$ to 1.7 g/cm3; or

(8) a thickness of the negative current collector is less than or equal to 8 μm, and optionally, is 4 μm to 6 μm.

**14.** A secondary battery, comprising the negative electrode plate according to claim 12 or 13.

**15.** An electrical device, comprising the secondary battery according to claim 14.

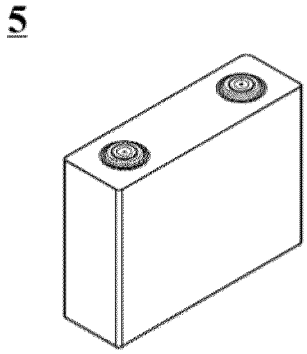


FIG. 1

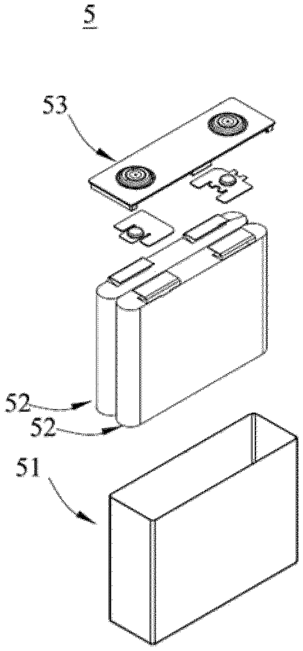


FIG. 2

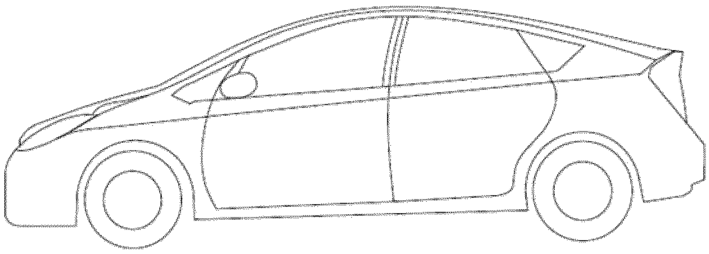

FIG. 3

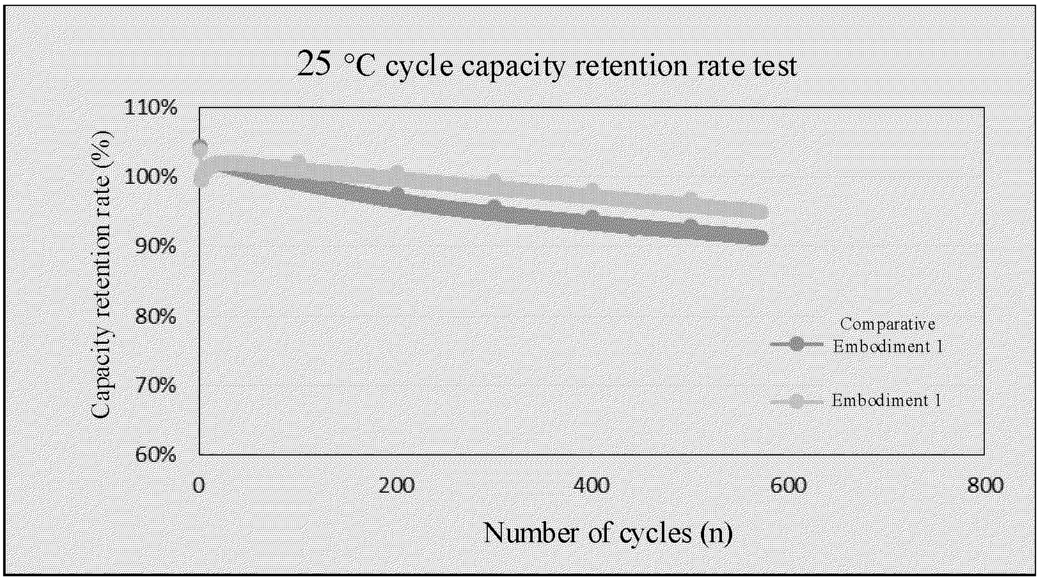
25 °C cycle capacity retention rate test
110%
100%
90%
80%
70%
60%
Capacity retention rate (%)
0
200
400
600
800
Number of cycles (n)
Comparative Embodiment 1
Embodiment 1

FIG. 4

**INTERNATIONAL SEARCH REPORT**

International application No.
**PCT/CN2022/088834**

**A. CLASSIFICATION OF SUBJECT MATTER**

C09J 171/02(2006.01)i; H01M 4/62(2006.01)i

According to International Patent Classification (IPC) or to both national classification and IPC

**B. FIELDS SEARCHED**

Minimum documentation searched (classification system followed by classification symbols)

C09J;H01M

Documentation searched other than minimum documentation to the extent that such documents are included in the fields searched

Electronic data base consulted during the international search (name of data base and, where practicable, search terms used)

WPI, EPODOC, CNPAT, CNKI: 电池, 负极, 阳极, 聚醚, 多元醇, 乙二醇, 丙二醇, 塑性, 增塑, 柔性, batter+, cell?, anode, negative, electrode, polyether, polyhydric, glycol, ethanediol, propylene, plastic+, flexible

**C. DOCUMENTS CONSIDERED TO BE RELEVANT**

| Category* | Citation of document, with indication, where appropriate, of the relevant passages | Relevant to claim No. |
|---|---|---|
| X | CN 113980629 A (ZHUHAI COSMX BATTERY CO., LTD.) 28 January 2022 (2022-01-28) description, paragraphs 39-105 | 1-5, 8-15 |
| X | CN 110350238 A (ZHONGXING HIGH ENERGY TECHNOLOGY CO., LTD.) 18 October 2019 (2019-10-18) description, paragraphs 93-108 | 1-3, 8-11 |
| A | CN 113937287 A (ZHUHAI COSMX BATTERY CO., LTD.) 14 January 2022 (2022-01-14) entire document | 1-15 |
| A | JP 2001035496 A (NIPPON ZEON K. K.) 09 February 2001 (2001-02-09) entire document | 1-15 |

☐ Further documents are listed in the continuation of Box C. ☑ See patent family annex.

* Special categories of cited documents:
“A” document defining the general state of the art which is not considered to be of particular relevance
“E” earlier application or patent but published on or after the international filing date
“L” document which may throw doubts on priority claim(s) or which is cited to establish the publication date of another citation or other special reason (as specified)
“O” document referring to an oral disclosure, use, exhibition or other means
“P” document published prior to the international filing date but later than the priority date claimed
“T” later document published after the international filing date or priority date and not in conflict with the application but cited to understand the principle or theory underlying the invention
“X” document of particular relevance; the claimed invention cannot be considered novel or cannot be considered to involve an inventive step when the document is taken alone
“Y” document of particular relevance; the claimed invention cannot be considered to involve an inventive step when the document is combined with one or more other such documents, such combination being obvious to a person skilled in the art
“&” document member of the same patent family

| Date of the actual completion of the international search | Date of mailing of the international search report |
|---|---|
| **06 December 2022** | **16 December 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
**Information on patent family members**

International application No.
**PCT/CN2022/088834**

| Patent document cited in search report | Publication date (day/month/year) | Patent family member(s) | Publication date (day/month/year) |
|---|---|---|---|
| CN 113980629 A | 28 January 2022 | None | |
| CN 110350238 A | 18 October 2019 | None | |
| CN 113937287 A | 14 January 2022 | None | |
| JP 2001035496 A | 09 February 2001 | DE 60043858 D1 | 01 April 2010 |
| | | WO 0106584 A1 | 25 January 2001 |
| | | EP 1244157 A1 | 25 September 2002 |
| | | TW 459414 B | 11 October 2001 |
| | | US 6770397 B1 | 03 August 2004 |

Form PCT/ISA/210 (patent family annex) (January 2015)